(19) Europäisches Patentamt
European Patent Office
Office européen des brevets

(11) EP 1 458 764 B1

(12) **EUROPEAN PATENT SPECIFICATION**

(45) Date of publication and mention of the grant of the patent:
**23.05.2007 Bulletin 2007/21**

(21) Application number: **02795054.2**

(22) Date of filing: **23.12.2002**

(51) Int Cl.:
***C08B 37/00*** *(2006.01)*

(86) International application number:
**PCT/DK2002/000904**

(87) International publication number:
**WO 2003/059955 (24.07.2003 Gazette 2003/30)**

(54) **A METHOD FOR MANUFACTURING AND FRACTIONATING GELLING AND NON-GELLING CARRAGEENANS FROM BI-COMPONENT SEAWEED**

VERFAHREN ZUR HERSTELLUNG UND FRAKTIONIERUNG VON GELBILDENDEN UND NICHT GELBILDENDEN CARRAGEENANEN AUS ZWEIKOMPONENTIGEM TANG

PROCEDE DE FABRICATION ET DE FRACTIONNEMENT DE CARRAGHENANES GELIFIANTS ET NON GELIFIANTS A PARTIR D'ALGUES A DEUX COMPOSANTS

(84) Designated Contracting States:
**AT BE BG CH CY CZ DE DK EE ES FI FR GB GR IE IT LI LU MC NL PT SE SI SK TR**

(30) Priority: **28.12.2001 DK 200101961**

(43) Date of publication of application:
**22.09.2004 Bulletin 2004/39**

(73) Proprietor: **CP Kelco APS**
**4623 Lille Skensved (DK)**

(72) Inventor: **THERKELSEN, Georg**
**DK-4000 Roskilde (DK)**

(74) Representative: **Klinge, Ulla Callesen et al**
**Chas. Hude A/S,**
**33 H.C. Andersens Boulevard**
**1780 Copenhagen V (DK)**

(56) References cited:
**US-A- 3 094 517**
**US-A- 3 176 003**
**US-A- 3 879 890**
**US-A- 3 907 770**
**US-A- 4 443 486**
**US-A- 4 816 573**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## Technical Field

The present invention relates to a novel method for processing bi-component seaweed. More specifically the present invention relates to a method for the manufacture of carrageenans from bi-component seaweed, wherein the seaweed is subjected to an alkaline treatment in such a way that both kappa bearing and lambda bearing plants stay integral during the process, allowing subsequently a selective extraction of the lambda component from the bi-component seaweed mix while the kappa bearing plants stay integral. Furthermore the present invention relates to a carrageenan product obtainable by this proces.

## Background Art

Carrageenans comprise a class of polymeric carbohydrates which are obtainable by extraction of certain species of the class Rhodophyceae (red seaweed). In an idealised carrageenan the polymeric chain is made up of alternating A- and B-monomers thus forming repeating dimeric units. However in crude seaweed and thus in processed and purified carrageenans as well this regularity is often broken by some monomeric moieties having a modified structure.
Some carrageenans present particularly desirable hydrocolloid characteristics in the presence of certain cations and thus exhibit useful properties in a wide range of applications. Accordingly carrageenans are used as gelling and viscosity modifying agents in food as well as in non-food products, such as dairy products, gummy candy, jams and marmalade, pet foods, creams, lotions, air fresheners, gels, paints, cosmetics, dentifrices, etc.
In the aforementioned applications the carrageenans are used either as a refined carrageenan (RC) product or as a semirefined carrageenan (SRC) product containing other seaweed residues.
As stated above the carrageenans comprise alternating A- and B-monomers. More specifically the carrageenans comprise chains of alternating moieties of a more or less modified D-galactopyranose in a $\alpha(1\rightarrow3)$ linkage and a more or less modified D-galactopyranose in a $\beta(1\rightarrow4)$ linkage, respectively. The different types of carrageenans are classified according to their idealised structure as outlined in Table 1 below.

**Table 1**

| Carrageenan | 3-linked residue (= B) | 4-linked residue (= A) |
|---|---|---|
| Beta (β) | Beta-D-galactopyranose | 3,6-anhydrogalactopyranose |
| Kappa (κ) | Beta-D-galactopyranose-4-sulphate | 3,6-anhydrogalactopyranose |
| Iota (τ) | Beta-D-galactopyranose-4-sulphate | 3,6-anhydrogalactopyranose-2-sulphate |
| Mu (μ) | Beta-D-galactopyranose-4-sulphate | galactopyranose-6-sulphate |
| Nu (ν) | Beta-D-galactopyranose-4-sulphate | galactopyranose-2,6-disulphate |
| Lambda (λ) | Beta-D-galactopyranose-2-sulphate (70%) and galactopyranose (30%) (for Chondrus) | galactopyranose-2,6-disulphate |
| Theta (θ) | Galactopyranose-2-sulphate (70%) and galactopyranose (30%) (for Chondrus) | 3,6-anhydrogalactopyranose-2-sulphate |
| Xi (ξ) | Beta-D-galactopyranose | 2- Alpha-D-galactopyranose-2-sulphate |

Normally the polymer chains originating from seaweed deviate from the ideal structure in having irregularities present, such as e.g. single moieties within the chain possessing a higher or lower number of sulphate groups. Also co-polymer types (or hybrid types) of carrageenans having two alternating sequences each representing different repeating dimeric units of two monomers are present in some seaweed species. Accordingly a vast array of different carrageenan materials having different properties exists.
The extent of gelling ability of the different types of carrageenans is inter alia determined by the amount of hydrophilic groups in the galactopyranose rings, molecular weight, temperature, pH and type and concentrations of the salts in the solvent with which the hydrocolloid is mixed.
For gelling purposes, organoleptic and water binding purposes as well as texture and viscosity modifying purposes the most interesting and widely used carrageenans are the kappa-, iota-, theta- and lambda-carrageenans. These are not all present in the crude seaweed, but some of these are obtained by alkali modification of precursor carrageenans (mu-, nu- and lambda-carrageenan respectively) present in the crude seaweed according to the following reaction scheme:

$\mu$-carrageenan + $OH^-$ $\rightarrow$ $\kappa$-carrageenan

$\nu$-carrageenan + $OH^-$ $\rightarrow$ $\tau$-carrageenan

$\lambda$-carrageenan + $OH^-$ $\rightarrow$ $\theta$-carrageenan

Thus by alkali treatment of crude seaweed an intramolecular ether bond is formed within one of the ring moieties in the dimeric units of the carrageenan polymer providing less hydrophilic character to the polymer and accordingly rendering the polymer a more powerful gelling agent. The gelling properties are caused by the carrageenans organizing in a tertiary helical structure.

The kappa and iota structures (and their precursors) differ only by one sulphate group and are in fact always to some extent found in the same molecular chains from one seaweed material, and for this reason this group of carrageenan structures is called the "kappa family" of carrageenan structures. Almost pure kappa/mu respectively iota/nu providing seaweed exist, however, as do seaweeds that provide more equally balanced copolymers or "hybrids".

Likewise, according to the literature: McCandless, E.L. et al., Planta (Ber1.) 112, 201-212 (1973), the xi and lambda (and its modified structure, theta, after processing) are predominantly, if not always, obtained from distinct seaweed material which gives rise to the term "lambda family" for this group of carrageenan structures.

Whereas the isolated lambda- and theta-carrageenans are water soluble under almost every condition of temperature and salt concentration, the kappa- and iota-carrageenans - in the potassium and/or calcium salt form - are insoluble in cold water. All of the above carrageenans are soluble in hot water. The kappa- and iota-carrageenans are able to form gels in the presence of $K^+$, $Ca^{2+}$, $Mg^{2+}$, $Ba^{2+}$, $Sr^{2+}$ and $NH_4^+$. The lambda and theta-carrageenans on the other hand do not form gels.

Some commercially available red seaweed species or populations contain only one carrageenan type (and its precursor). These are called "mono component seaweeds" in the present application. The commercially available seaweed Eucheuma cottonii belongs to this category containing only one family of carrageenans, the "kappa family".

Other examples of commercially available mono-component seaweed are Eucheuma spinosum, Hypnea spp. and Furcellaria spp.

However many available red seaweed species or populations contain at least two carrageenan types (including some of their precursors). Such are in the present application called "bi-component seaweeds". According to the literature, these have till now been found within the families Gigartinaceae and Phyllophoraceae of the order Gigartinales. The commercially available seaweed Chondrus crispus belongs to this category, containing the "kappa family" as well as the "lambda family" of carrageenan structure, reportedly it may be in the ratio of 70% kappa and 30% lambda. Other examples of commercially available bi-component seaweeds are several species from the Gigartina genus: Gigartina chamissoi, Gigartina pistillata, Gigartina radula. The latter species comprises the commercial names: skottsbergii (GSK), "Narrow leaf" (GNL) and "Broad leaf" (GBL). In the scientific literature, the GNL is also known as Mazaella laminarioides and the GBL is known as Sarcothalia crispata.

The present invention relates to the manufacture of carrageenans from bi-component seaweed, in particular from plants comprising kappa-family carrageenan and lambda-family carrageenan although such seaweed in practice may contain a certain proportoin of seaweed from the group of mono-component seaweeds. Thus, bi-component seaweed plants as well as mixtures of plant materials which individually comprise kappa-family and lambda-family carrageenans may be processed by the method according to the present invention.

In the present application the term "gelling carrageenan" will be used for those carrageenan types which are able to form gels. Thus, the kappa family of carrageenans are "gelling carrageenans", whereas the lambda family of carrageenans are not considered to be gelling carrageenans. The term "gelling carrageenan precursor" denotes in the present application a carrageenan precursor which becomes gelling after alkali modification. Thus the precursor itself may be non-gelling.

Traditionally, bi-component seaweed for carrageenan manufacture has been processed by hot extraction. Thus, the seaweed has been subjected to an extraction with water at high temperature and with a high pH in order to conduct an alkaline treatment during and after the extraction per se. The liquid extract is then purified by centrifugation and/or filtration. After this, the hydrocolloid is obtained either by evaporation of water or by selective precipitation by a potassium salt, or by an alcohol, such as isopropanol. This method of manufacture yields a refined carrageenan, hereinafter called RC, however, containing both the kappa component and the lambda component of the original bi-component seaweed. The possibility of producing one or both of the components, individually or together, as a semi-refined carrageenan, hereinafter called SRC, is not possible according to this traditional way of carrageenan manufacture.

CA 561,448 (Smith) relates to a process of fractionating geloses derived from algae of the order Gigartinales. In the process of Smith the gelose is treated with a salt comprising a cation selected among ammonium, potassium, rubidium and cesium, whereby a precipitate is formed. The precipitate mainly contains the kappa carrageenan compound and the remaining solution mainly contains the lambda carrageenan component. The two fractions are separated by centrifugation or by filtration. However it is stated, that the individual fractions are not obtained in pure forms, but one fraction contains small amount of the other and vice versa. No alkaline treatment carried out on the seaweed prior to the fractionation step is mentioned.

US 3,176,003 (Stancioff) relates to a method for selective extraction of lambda- and kappa-fractions from seaweed. The method of Stancioff involves soaking the seaweed in a water solution of salts and hydroxides of cations selected among ammonium, potassium, rubidium, cesium, calcium, barium, strontium and magnesium at a temperature of 5-90 °C at a cation concentration, C given by the equation $0 > \log C > 0.03\,T - 2.77$, wherein C is the cation concentration in mol/l and T is the temperature in degrees centigrade, and at a hydroxyl concentration not above approximately 0.2 mol/l, in order to render the lambda fraction soluble while keeping the kappa fraction insoluble. Finally the solution containing the lambda fraction is separated from the solid phase containing the kappa fraction. In this document the use of a hydroxide concentration below 0.2 M. is disclosed. Although hydroxide is present, it serves merely to increase seaweed swelling and to obtain an increased product yield, not to modify the carrageenan.

US 4,816,573 (Whitaker) relates to a method for separating lambda- and kappa-fractions ofbi-component seaweed. In the method mixtures of lambda carrageenan bearing plants and kappa carrageenan bearing plants are treated with an aqueous medium, so that the lambda fraction is hydrated to a higher extent than the kappa fraction, and the separation is then carried out based on differences in water content of the two fraction. In one embodiment the aqueous medium has a temperature in the range 5-95 °C and a pH of above about 10 and it further contains cations selected among ammonium, potassium, rubidium, cesium, calcium, barium, strontium and magnesium. The separation of the two fractions is performed manually or by machine. No alkali modification of the carrageenans is disclosed.

US 3,879,890 (Chen et al.) discloses a method for manufacturing kappa and lambda carrageenans respectively in a nearly pure quality. The method avoids post-harvest separation by chemical or physical means by separating vegetative parts of spores from eg. the genera Chondrus or Gigartina into gametophytes and tetrasporophytes and allowing each type of plant material to propagate separately. After harvest the polysaccharides were recovered, eg. by precipitation with 2-propanol. No alkali treatment of the carrageenans is disclosed.

In US 3,094,517 (Stanley) a homogenous process for modifying carrageenans to higher gel strength is disclosed. The process involves the use of an alkali, preferably calcium hydroxide. An excess of calcium hydroxide, which may amount to 40% to 115% of the weight of carrageenan present in the seaweed, has proven especially effective. The mixture of seaweed and alkali is then heated to temperatures ranging from 80 °C to 150°C, for a period of 3-6 hours. The excess alkali may be recovered for reuse, after which filter aid is added and filtration accomplished by any suitable type of equipment, while the mixture is still hot. The filtered extract is then neutralized using any suitable acid. When filtered, the extract is drum dried, spray dried or coagulated with alcohol. When alcohol precipitation is employed, the resulting coagulate is dried using conventional methods. This homogenous extraction process works well for mono-component as well as bi-component seaweed. In the latter case, however, no method of fractionating the lambda-family carrageenans from the kappa-family carrageenans is disclosed.

Rideout et al. in US 5,801,240 refer to a prior art method for the production of semi refined or crude carrageenan, and US 5,801,240 relates to improvements to this process. The method of Rideout et al. involves a number of steps: First the raw seaweed is cleaned and sorted. The cleaned and sorted seaweed is then rinsed at ambient temperature with either fresh water or a recycled potassium hydroxide wash. The seaweed is then placed in an aqueous potassium hydroxide cooking solution at 60-80 °C (2 hours at 12 wt% KOH or 3 hours at 8 wt% KOH) to modify the carrageenan and to dissolve some of the alkali soluble sugars. After cooking, the seaweed is removed and drained, and is then put through a series of wash steps to reduce the pH, to wash away residual potassium hydroxide, and to dissolve sugars and salts. Lastly, the resulting semi refined carrageenan is chopped, dried and ground. The inventive process by Rideout et al. further comprises the steps of monitoring the reaction progress by measuring the oxidation-reduction potential and stopping the reaction when an equilibrium as measured by a predetermined constant value of this potential is reached. The document does not specifically mention processing of other seaweed species than E. cottonii, but states that other kind of plant material, if present, typically will be removed during sorting. Thus, the document relates only to mono-component seaweed.

WO 94/22,922 (Larsen) relates inter alia to a method for preparation of a carrageenan product, wherein seaweed in a water/solvent alkaline system is heated to modify the seaweed starting material. The solvent to water weight ratio ranges within 5:95 to 50:50, the alkali concentration ranges within 0.25 M/kg liquid phase to 3.0 M kg liquid phase, and the temperature range is 50 - 150 °C. The reaction time is 15 min. to 30 h. When the reaction is completed, the reaction medium is drained and the treated seaweed is washed with one or more solvent/water mixtures. Subsequently the seaweed material is dried. Mono-component as well as bi-component seaweed may be processed according to this method. However, no fractionation is disclosed in this document.

Thus, as it appears from the above sections, in the prior art a number of approaches have been contemplated when dealing with the processing of bi-component seaweed. The carrageenans can be separated least sophisticatedly by sorting the bi-component seaweeds which contain distinctive kappa bearing and lambda bearing plants. This method is labour consuming and difficult, however, as the two types ofplants resemble each other very much. Nevertheless, it is or has been done in a commercial scale, and sorted lambda bearing plants are or have been available from at least both GSK and GBL (grade called "elastico"). Due to the costs involved in separating the plants, the price level is substantially higher than that of the unsorted seaweeds of the same species.

Other means for separating the kappa- and lambda-fractions comprises keeping the individual kappa respective lambda bearing plants apart under farming conditions (Chen). This method does not seem to have been exploited commercially in any consistent way, presumably due to excessive cost of farming as compared to harvesting of wild growth.

The mix of kappa respective lambda bearing plants may also be separated industrially (Whitaker) after a humidifying step which converts the lambda plants into highly swollen and sticky plants which may be mechanically separated from the less swollen and hard kappa plants.

Other methods discloses in-process fractionation methods where the lambda fraction is separated from the kappa fraction during the extraction process (Stancioff) or after the extraction process (Smith), before working up the fractions individually.

All the above methods in which the carragenens are separated into a kappa-family fraction and a lambda-family fraction, must be followed by a separate alkaline treatment of the kappa plant fraction in order to obtain its full gelling potential with consequent costs of chemicals and equipment.

On the other hand the prior art also discloses methods for alkali treatment of bi-component seaweed.

The alkaline modification ofbi-component seaweeds can be carried out as a homogeneous reaction by using $Ca(OH)_2$ or other as the alkali (Stanley). This method is widely used in industry but is not combined with subsequent fractionation, presumably due to the excessive costs implied with the such a process. It also employs large amounts of water from the onset of the process sequence, adding to process costs in connection with the handling and eventual removal of the water. The resultant in-process bi-component carrageenan solution, due to its significant content of the lambda or theta fraction, will, moreover, be little amenable to a subsequent isolation by KC1 (which is economically preferred over alcohol) which gels with only the kappa fraction of the mixture.

The alkaline modification ofbi-component seaweeds can, however, be carried out as a heterogeneous reaction by using alkaline solvent/water mixtures (Larsen) which serve to maintain both kappa and lambda bearing plants integral during the process. For the same reason, solvent/water mixtures are also used for the subsequent washing steps where excess chemicals and impurities are eliminated. It is a serious draw-back of this method that solvent/water mixtures are widely used, and frequently at high temperatures, for reasons of flammability and consequent costly measures to ensure operation safety, recovery of the solvent and removal of solvent residues from the final product.

However neither of the two latter documents disclose the fractionation of the carrageenan material into lambda-family carrageenans and kappa-family carrageenans.

Thus according to the prior art the processing of bi-component seaweed to obtain a kappa-family fraction having a high content of the highly valuable, modified kappa-carrageenan and a lambda-family fraction, must be conducted in two separate processes; either by alkali modification of the seaweed in one homogeneous process and subsequently separation into the isolated fractions in a separate process, or by performing first the separation and subsequently the alkali modification in two separate processes.

Accordingly, there exists a need for a process for processing bi-component seaweeds that includes the benefits from a heterogeneous alkaline treatment as known from the processing of mono-component seaweeds (eg. non-dissolution of modified kappa-carrageenan) but excludes the draw-backs of using solvent/water mixtures to maintain seaweed integrity and that optionally permits a low cost fractionation step for obtaining a high quality lambda fraction and a high quality kappa fraction individually, the latter optionally in a semi-refined form.

It has now surprisingly been found that a method for processing bi-component seaweed can be designed, wherein seaweed heterogeneously undergoes an alkali modification by being subject to an alkaline treatment in an aqueous solution having a high salt concentration to maintain seaweed integrity, provided by a particular composition and concentration of salts, and wherein optionally a subsequent low cost fractionation of the treated seaweed into its lambda fraction and its kappa fractions individually optionally may be performed.

## Brief Description of the Invention

Accordingly the present invention relates to a method for the manufacture of carrageenans from seaweed comprising kappa-family carrageenan and lambda-family carrageenan, in particular from bi-component seaweed, wherein the seaweed is subjected to:

1) a heterogenous reaction step in an aqueous alkaline medium having an $OH^-$ concentration and a temperature which enable the modification to the desired extent of kappa-family precursor(s) to gelling kappa-family carrageenan (s);

2) a separation step to separate the solid treated material containing the carrageen, an(s) from the liquid phase;

3) one or more fractionation steps, wherein the solid treated seaweed material obtained in 2) is treated with an aqueous extraction medium in order to wash out excess alkali and to extract the lambda-family carrageenan(s); so as to obtain a solid fraction comprising the gelling kappa-family carrageenan(s) and a liquid fraction comprising the lambda-family carrageenan(s);

4a) optionally drying and optionally grinding of the solid fraction obtained in 3) to obtain semi-refined kappa carrageenan (SRC-kappa); and/or

4b) optionally further extraction, purification and isolation of the solid fraction obtained in 3) and/or in 4a) to obtain refined kappa family carrageenan (RC-kappa);

5) optionally further processing of the liquid fraction obtained in 3), comprising the steps of purification and isolation to obtain refined lambda family carrageenan (RC-lambda);

6) optionally further extraction, purification and isolation of the solid material obtained in 2) to obtain a refined mix of kappa-family and lambda-family carrageenan (RC);

characterised in that the aqueous alkaline medium employed in 1) has a content and composition of NaCl and/or KCl and optionally other non-alkali salts, up to a concentration of saturation, sufficient to essentially prevent the disintegration of the seaweed and essentially prevent the dissolution of the carrageenan present therein.

Furthermore the present invention relates to a carrageenan products obtainable by the above method.

Thus, the present invention is based on the findings, that under specific conditions of alkali concentration, temperature, salt concentration and salt composition of the reaction medium, it is possible to process bi-component seaweed in an aqueous heterogenous reaction step, in which the kappa-family precursors are modified to the desired extent, and wherein the seaweed essentially does not disintegrate and essentially no dissolution of carrageenans occurs. After the reaction step the solid material remaining (comprising modified kappa-family carrageenan and lambda-family carrageenan) is separated from the alkali medium and fractionated into a kappa-family solid fraction and a lambda-family liquid fraction by treatment with an aqueous medium. The solid kappa-family fraction obtained after the fractionation may then be dried and optionally ground to obtain semi-refined kappa carrageenan (SRC-kappa), or the solid kappa-family fraction may be further extracted, purified and isolated to obtain refined kappa-family carrageenan (RC-kappa).

The liquid fraction containing the lambda-family fraction may likewise be further processed by purification and isolation to obtain refined lambda-family carrageenan (RC-lambda). Prior to further purification of the lambda-family fraction, it may as an option be subjected to additional alkaline modification. Such modification may be feasible by holding the liquid fraction at a suitably high temperature and with only that alkali present which is already contained in the liquid fraction, or it may require addition of more alkali.

A further advantageous feature of the method according to the present invention is the additional findings that under the above mentioned certain conditions of temperature, salt concentration and salt composition of the reaction medium, it is possible to obtain a wide range of desirable alkaline modification degrees of the kappa fraction of the bi-component seaweed while the lambda fraction produced in conjunction herewith essentially suffers no such observable process related changes which could have been expected to negatively impact its usefulness and cost/efficiency as a thickener and stabiliser in a substantial way, as compared to current carrageenan products produced for such applications.

Important beneficial aspects of the invention are that the kappa fraction, as obtained as a wet or dry intermediate when executing the process of the invention, and now liberated substantially from the non-gelling lambda component, thus becomes eligible to be worked up in the most economical and desirable way. The most economical way would be to work up the kappa fraction simply by drying and grinding to an SRC final product. The second most economical way would be to work up the kappa fraction by isolating with KCl, gel pressing and finally drying and grinding to an RC final product. The third most economical way would be to work up the kappa fraction by isolating with alcohol, pressing and finally drying and grinding to an RC final product. The savings in process costs incurred when choosing one or the other more economical way of isolation may amount to 40 - 70 % of those incurred with the current process using isolation by means of alcohol.

**Brief Description of Drawings**

The invention is disclosed in more detail by reference to the drawings wherein:

Fig. 1 depicts viscosity measurements of GBL-10 (Gigartina radula "broad leaf" originating from Region X in Chile) as a function of temperature under conditions of 5 % (w/v) NaOH and 1 % (w/v) KCl, and at different NaCl concentrations. It appears from fig. 1, that the viscosity rapidly rises at higher temperatures and in those cases where the lower percentages of NaCl are used, indicating that carrageenan dissolves and that, subsequently, some seaweed disintegration occurs (visually observed).
Based on the measurements illustrated in fig. 1 and accompanying visual observations of seaweed disintegration, approximate "threshold" NaCl concentrations can be determined for each chosen temperature. This leads to the appearance of an approximate "phase diagram" for the seaweed being subj ected to alkali treatment. This is seen in Fig. 2.

Fig. 2 is accordingly a phase diagram showing the threshold concentration of NaCl for keeping the gelling carrageenan in different bi-component seaweeds insolubilised under conditions of an alkali strength of 5 % (w/v) NaOH and 1 % (w/v) KCl at different temperatures. Fig. 2 depicts these threshold concentrations for the bi-component seaweeds known as Chondrus NS (*Chondrus crispus* originating from Nova Scotia, Canada), Chondrus PEI (*Chondrus crispus* originating from Prince Edward Island, Canada), and the four *Gigartina radula* seaweed materials known as GSK, GBL-8 (originating from Region VIII in Chile), GBL-10 (originating from Region X in Chile) and GNL. Fig. 2 thus reveals that the carrageenans in a certain bi-component seaweed will largely remain undissolved in a 5 % (w/v) NaOH solution at temperatures below a specific point at the curve corresponding to this seaweed at the corresponding NaCl concentration. In other words, the area below the curves corresponds to situations - or combinations of temperature and NaCl concentrations - in which the carrageenans are dissolved. It is noted that for two of the seaweed materials tested, the GBL-8 and the GNL, absence of disintegration/dissolution even in the lower temperature range of 60-70 °C demands almost saturation of the solution with NaCl.

Fig. 3 is a phase diagram, constructed in the same way as fig. 2, only with the use of KCl instead of NaCl. When comparing figs. 2 and 3 for each seaweed individually, the KC1 is seen to have a generally greater dissolution suppressing effect than NaCl, on an equivalent weight per volume concentration basis. It is noted that for the same two demanding seaweed materials as mentioned above, the GBL-8 and the GNL, absence of disintegration/dissolution in the lower temperature range 60-70 °C when using KCl, now requires only a concentration of 15-25 % (w/v) KCl, i.e. substantially less than saturation. It is hereby illustrated that it is possible, for each of the tested seaweed materials, to find a suitable "window" oftemperature, salt concentration and salt composition which enables us to carry out the alkaline modification of the bi-component seaweed mix without getting disintegration of the seaweed and dissolution of the carrageenan.

Fig. 4 is a simple flow chart depicting one mode for carrying out the method of the present invention. In Fig. 4 the seaweed is located in a stationary reaction tank (SW), and the different liquids to be used in the various steps according to the invention are transferred to and from this tank. Thus, step 1) and 2) - the alkali modification step and the subsequent separation of the treated seaweed from the used reaction medium - are performed in the Reaction Zone (RZ). $R_1$ symbolises a tank containing the aqueous alkaline medium to be used in step 1). In the Further Work-up Zone (FWZ) the optional step 3) is carried out. That is, the seaweed is extracted/fractionated with fractionation liquid in order to dissolve or extract the lambda-family carrageenans. The fractionation may be performed by one or more fractionation steps. In Fig. 4 $W_1$, $W_2$,... $W_n$ symbolise different tanks containing the fractionation liquids to be used in step 3). After these steps the solid kappa-bearing seaweed material may be further processed in a manner known per se to semirefined carrageenan (SRC) or refined carrageenan (RC) . Also the lambda-family carrageenan extracts may be further processed.

Fig. 5 shows a preferred mode for carrying out the method according to the invention in which a counter current set-up is established between the Reaction Zone and the Further Work-Up Zone. This is done by introducing a Lye Recovery Zone (LRZ) between the Reaction Zone and the Further Work-Up Zone. In the Lye Recovery Zone (LRZ), $L_1$, $L_2$, ... $L_n$ denote tanks containing a lye recovery solution. The arrows and accompanying numbers in Fig. 5 indicate the direction and chronological order of the flows in this counter current mode of carrying out the method according to the invention. This set-up will provide for an upstream movement of alkali and salts in the system and thus enable considerable reductions in the consumption of chemicals employed. This mode of carrying out the method according to the invention requires that a deficiency of water is created in the reaction step, e.g. by ensuring that the seaweed is introduced in the reaction step in a dry state, or by selectively removing water from this step by means of e.g. evaporation. It should be noted that this mode of carrying out the method according to the invention implies that the salt concentration and composition in the reaction step will be wholely or partly a result of the counter current set-up which serves to build up the concentrations of salts arising from the lye addition (typically KOH and/or NaOH) and the salts accompanying the seaweed when being introduced into the reaction step. Thus, the salt mix will be dominated by $K^+$ ions and $Na^+$ ions, in a certain ratio depending on the lye type and the amount and identity of the cations present the seaweed and thereby most often represent situations in between those illustrated in figs. 2 and 3.

Fig. 6 shows the water and milk viscosity performances of lambda carrageenan of GSK and GBL as obtained at different alkali concentrations.

The extent of applicability of the invention appears from the following detailed description. It should, however, be understood that the detailed description and the specific examples are merely included to illustrate preferred embodiments, and that various alterations and modifications within the scope of protection will be obvious to persons skilled in the art on the basis of the detailed description.

**Best Mode for Carrying out the invention**

According to the present invention it is possible in an efficient and convenient way to process bi-component seaweed material to obtain a solid, non disintegrated seaweed material comprising an alkali modified kappa-family fraction and a lambda-family fraction. In a preferred embodiment of the present invention these fractions may be separated in a subsequent fractionation step. Alternatively this solid material may be processed as is to obtain a carrageenan product comprising a mixture of kappa-family and lambda-family carrageenans.

In the following sections the method according to the present invention will be described with reference to fig. 4. This method includes the fractionation step.

In Fig. 4 the seaweed is located in a stationary tank equipped with suitable agitation means and the liquids with which the seaweed is to be treated are transferred to and from this tank. Fig. 4 only serves to explain one simple way of carrying out the method according to the invention, and thus to show how the individual steps in the inventive method may be performed. Thus, a person skilled in the art will know how to adapt the process set-up of Fig. 4 to other types of set-ups, e.g. to a process set-up in which the seaweed is not stationary, but moved from one tank to another.

The process set-up of Fig. 4 comprises two zones; a Reaction Zone (RZ) and a Further Work-Up Zone (FWZ). These zones comprise a number of tanks containing the liquids to be used in each step. In Fig 4 the arrows and accompanying numbers of the arrows indicate the direction and chronological order of the flows in the process. Preferably the seaweed and the liquid are agitated in each step in order to obtain thorough and efficient reaction/extraction.

The tanks in each step should have a size and a content that are sufficient for conducting the processes in each step efficiently. Thus, tanks having a volume that is not sufficient to contain the amount of liquid necessary in each step should be avoided.

<u>Reaction Zone</u>

In the Reaction Zone an alkaline aqueous medium situated in the reaction medium tank ($R_1$) having a specified alkali concentration and a specified salt concentration and composition is transferred to the seaweed tank (SW) as indicated by the arrow (1) and the reaction is carried out on the seaweed for a time sufficient to modify the carrageenan to a desirable extent.

<u>Further Work-Up Zone</u>

After the reaction step, the used alkali medium is drained from the seaweed and it may be transferred back to the reaction tank for reuse when running the next batch. This is denoted by the arrow (2). For purposes of running more than one batch ($R_1$) may subsequently be adjusted to essentially the original composition by adding the appropriate alkali and salts as indicated by (3) (obviously, this adjustment does not have to take place at this particular point, but the adjustment has to be carried out before running the batch to come). Subsequently the seaweed is subjected to one or more fractionation steps. This takes place in the Further Work-Up Zone. The Further Work-Up Zone comprises a number of tanks ($W_1$), ($W_2$), ...($W_n$) each containing an aqueous "extraction medium" to be used in each fractionation step. In the Further Work-Up Zone the extraction medium is transferred from the first extraction medium tank ($W_1$) to the seaweed tank (SW). This is indicated by the arrow (4). After a suitable processing time, the used fractionation medium is drained off as indicated by the arrow (5). This fraction contains a extracted lamda-family fraction.

Next, extraction medium from ($W_2$) is transferred to the seaweed tank (SW) as denoted by the arrow (6) and after a suitable amount of time the used extraction medium is drained off as denoted by the arrow (7). Repeated cycles of adding extraction medium to (SW) and processing for a suitable amount of time and draining used extraction medium are contemplated. This is shown for the n'th fractionation step by the arrows (8) and (9) respectively. Usually 3 fractionation steps will suffice as the first steps typically will provide for the largest extraction of lambda-family carrageenans, but only one as well as 4, 5 or 6 or more fractionation steps are contemplated. After a suitable number of fractionation steps the solid seaweed material containing the kappa-family fraction may continue along the processing line to be further processed to semi-refined kappa-carrageenan (SRC-kappa) or refined kappa-carrageenan (RC-kappa) as indicated by the arrow (10).

The previous sections have primarily focussed on the chronological order of the flows of liquids according to the method of the present invention as represented by Fig. 4. The following sections will focus more detailed on the various conditions of the single steps of the reaction and further work-up respectively according to the method of the present invention.

<u>The Heterogenous Reaction Step</u>

In the reaction step in the method according to the present invention various parameters have to be balanced in order to obtain conditions that provide acceptable results, i.e. specific conditions are necessary in order to avoid the seaweed material to disintegrate or dissolve, yet still providing kappa-family modification. These parameters comprise specific species of seaweed employed, type and concentration of alkali, type and concentration of non-alkali salts, temperature of the aqueous alkaline medium, reaction time, degree of agitation etc.

It should be stressed that terms such as: "aqueous medium", "aqueous solution" and "aqueous liquid" in the present application comprises a liquid substance comprising water, and it may thus also comprise some amounts of other solvents, such as alcohols. The amount of other solvents than water, such as alcohol on a weight/weight basis may amount to 0-50 %, such as 0-20 %, eg. 0-10 % or 0-5 %.

One requirement to the reaction conditions is that a sufficient salt concentration is present in the reaction medium in order to suppress or essentially prevent the carrageenans from being solubilised at the temperature employed and further to prevent the disintegration of the seaweed material. The sufficient salt concentration is provided by adding NaCl and/or KCl optionally also one or more other non-alkali salts. Thus in the reaction step according to the method of the present invention the aqueous medium used comprises alkali and optionally further comprises NaCl and/or KCl. Thus the sufficient salt concentration may be provided by adding to the reaction medium one or more other non-alkali salts, such as salts selected among sulphates of sodium, potassium and calcium and $CaCl_2$. The non-expensive salt, NaCl has been found useful for imparting sufficient salt concentration to the reaction medium. Another useful salt is KCl.

Fig. 2 and fig. 3 reveal possible combinations of salt type, salt concentration, alkali concentration, temperature and type of seaweed with which the kappa family and lambda-family carrageenans remain insolubilised and with which the seaweed material remains non-disintegrated. A person skilled in the art will know how to conduct similar simple experimentation in order to obtain corresponding diagrams revealing dissolution and disintegration thresholds for seaweed species under other conditions, i.e. under conditions of employment of other alkalis and non-alkali salts; or for other seaweed species. For more details reference is made to Example 1.

The purpose of the heterogeneous reaction step is to alkali modify the kappa-family carrageenan precursor(s). Based on literature findings (see e.g. Ciancia et al., in Carbohydrate Polymers 20 (1993), pp. 95-98), we may assume that the homogeneous alkali modification reaction of carrageenans follows overall 2nd order reaction kinetics. If we assume something similar for the heterogeneous reaction, we get:

$$-r_A = k_A * C_A * C_B$$

wherein

$r_A$ = the rate of reaction of reactant A (= carrageenan precursor)
k = rate constant (a function of temperature)
$C_A$ = concentration of reactant A (= carrageenan precursor)
$C_B$ = concentration of reactant B (= hydroxyl ions)

This illustrates the practical experience that a certain extent of modification of any one precursor carrageenan type may be obtained by a number of different combinations of temperature and alkali strength.

<u>The Seaweed</u>

The seaweed to be used in the method according to the present invention is a seaweed comprising kappa-family carrageenans as well as lambda-family carrageenans, in particular bi-component seaweed. Thus processing ofbi-component seaweed species as well as mixtures of mono- and bi-component seaweed species are contemplated.

Thus, species like Chondrus crispus, Gigartina chamissoi, Gigartina pistillata, Gigartina radula are particularly useful as starting material in the method according to the present invention. The seaweed is commercially available in a relatively dry form and dry matter contents of from 70 to 90 % is normal. The seaweed may be introduced in the reaction step in a dry or in a wet state. However, when a counter current process set-up - as described later - is applied, the seaweed should be introduced in the reaction step in a dry state in order to utilise the advantages obtainable by this set-up, such as savings in the consumption of chemicals employed in the process. The ratio of seaweed to aqueous alkaline medium depends of the amount of liquid present in the seaweed. Preferably the ratio of seaweed to aqueous alkaline medium is within the range 1:10 - 1:40 based on weight of dry seaweed.

Type of Alkali

According to the present invention the reaction step is carried out in an aqueous alkaline medium, wherein the $OH^-$ concentration required for modification of the kappa-family carrageenan precursor(s) is obtained by employing an alkali solution comprising one or more alkalis selected among KOH, NaOH, $Na_2CO_3$, Na-phosphates, $K_2CO_3$, K-phosphates and ammonia, optionally also comprising other suitable alkalis. The requirement to the alkali is that it is present in an amount sufficient to modify the kappa-family carrageenan precursor present in the seaweed to a desirable extent at the temperature employed. It may for some applications be desirable to obtain a modification of the lambda-family precursors. This may be obtained by processing the seaweed at higher alkali strengths. Alternatively the lambda fraction may be submitted to a subsequent alkali modification treatment after its fractionation, but prior to its refining.

Likewise, there may exist a "window" of process parameters that allow the manufacture of a lambda-family fraction having after refinery some desirably qualities concerning viscosifying or dissolution performance, but which parameters result in a modified kappa-family fraction that for some purposes might have to be modyfied further. Thus in this case, it is desirable to subject the kappa-family fraction to further alkali treatment after the separation step, but prior to the further work-up.

Preferred alkalis include KOH, NaOH, $Na_2CO_3$, Na-phosphates, $K_2CO_3$, K-phosphates and ammonia or mixtures thereof. In a special embodiment of the method of the present invention, the alkali in the alkaline solution supplied to the seaweed in the reaction step essentially consists solely of KOH, NaOH, $Na_2CO_3$, Na phosphates or mixtures thereof.

If NaOH is used as the only alkali source, the concentration $C_B$ of the alkali may be within the range 0.1 % < $C_B$ < 12 % (w/v), preferably 0.2 % (w/v) < $C_B$ < 10 % (w/v), most preferred 0.3 % (w/v) < $C_B$ < 8 % (w/v). If another alkali or a mixture of other alkalis is/are used the concentration of this/these alkali(s) should be adjusted so as to obtain a solution having a modification power corresponding to the modification power of the NaOH solution having a concentration within the above ranges. The concentration necessary for other alkalis or mixtures of alkalis may be found by simple experimentation.

Temperature

The temperature should be chosen so that it is possible to conduct the reaction step in a time period of less than about three hours. However longer reaction times are possible, but less preferred due to practical concerns. When choosing the reaction temperature, consideration concerning the solubility of the carrageenans should be taken. Thus the reaction temperature to be used is limited to values for which the kappa-family and lambda-family carrageenans essentially do not enter into solution and for which essentially no seaweed disintegration occurs. These values are dependent of the salt concentration in and the composition of the aqueous alkaline medium. The temperature of the aqueous alkaline medium typically ranges within 30 - 95°C. When NaOH is used as the alkali a temperature of 40 - 90 ° C, preferably 50 - 85 ° C, most preferred 55 - 80 °C, may be applied. Since the solubility of carrageenans generally increases with increasing temperature, lower temperatures require lower salt concentration and vice versa. Preferably the aqueous alkaline medium is heated to the reaction temperature prior to the mixing with the seaweed, but it may also be heated after mixing with the seaweed. It may for some application be desirable also to obtain a modification of the lambda-family precursors. This may be obtained by processing the seaweed at higher temperatures.

Non-alkali salts

One feature of the process according to the present invention is that seaweed disintegration may be avoided by ensuring a certain amount of salt concentration in the aqueous alkaline medium. This salt concentration is achieved by supplying non-alkali salts to the aqueous medium. These non-alkali salts comprise NaCl and/or KCl, and optionally additionally salts may be used. These additional salts may in principle be of any type, but cost considerations will of course limit the type range of such practically useful salts. Another restricting factor for suitable salts is that they should not act as acids which decrease the basicity of the medium. Thus, suitable additional non-alkali salts may be chosen among sulphates of sodium, potassium and/or calcium as well as calcium chloride. The amount of non-alkali salts to be employed depends inter alia on the seaweed to be processed, and on the type of salt. If NaCl is used as the salt concentration will typically be 7 - 35 % (w/v) NaCl. If other kinds of non-alkali salts are employed these should be included in the aqueous alkali reaction medium in a concentration that corresponds to a dissolution-suppressing (and non-disintegration) effect of NaCl in the range stated for NaCl. A person skilled in the art will easily be able to perform experiments revealing such necessary concentration of non-alkali salts other than NaCl (cf. Example 1).

Balancing Various Reaction Parameters

As it appears from the sections above, several parameters have to be balanced in order to obtain reaction conditions that provide for modifying the kappa-family carrageenan precursor ofbi-component seaweed while still keeping the carrageenans undissolved and the seaweed material non-disintegrated. Examples of such combinations of reaction parameters which provide conditions which allow the reaction step to be conducted heterogenously without disintegration of the seaweed material can be deduced from Fig. 2 and 3 for some Chondrus and Gigartina seaweed species.

Accordingly it is seen from Fig. 2 that the carrageenans in the species Chondrus PEI remains undissolved in a 5% (w/v) NaOH solution comprising 1 % (w/v) KCl up to temperatures of 85 °C when the NaCl concentration is 15 % (w/v) or above this value. Turning to fig. 3, it is revealed that the same species remains undissolved in a 5% (w/v) NaOH solution comprising up to temperatures of 90 °C when the solution in addition contains KCl in a concentration of only 15 % (w/v), making KCl a better solubility-suppressing salt for Chondrus PEI, as compared to NaCl.

When a high extent of reaction (kappa-family carrageenan modification) is desired, a combination of process parameter values is normally chosen which gives a high reaction rate: high alkali strength during the whole reaction time and high temperature. E.g. > 5 % (w/v) NaOH, 60 ° C, 3 hours and a salt concentration that will suppress dissolution of the carrageenans and disintegration of the seaweed (as determined from a phase diagram) under these conditions. A high extent of carrageenan modification will result in kappa-family carrageenans with high gel strength.

Incomplete Alkali Modification

In some cases, however, there is a need for accomplishing an incomplete alkali modification ofthe kappa-family carrageenans in the seaweed. By restricting alkali modification, carrageenans with less gelling power can be produced. Such carrageenans produce gels of lower gel strength with less water exudation or syneresis and are advantageous for making gels with increased spreadability and an increased creamy mouth feel. These carrageenans are particularly important in the manufacture of dairy desserts. In the present application also these carrageenans are classified as "gelling carrageenans". Such restricted alkali modification may be provided by employing reaction conditions of reduced alkali strength, reduced reaction time and/or reduced temperature.

When a low extent of reaction (carrageenan modification) is desired, a combination of process parameter values is normally chosen which gives a low reaction rate: low initial and (more importantly) low final alkali strength, temperature and time may also be reduced ifneeded. E.g. < 1 % (w/v)NaOH, 60 °C, 2 hours, and a salt concentration that will suppress dissolution of the carrageenans and disintegration of the seaweed (as determined from a phase diagram) under these conditions.

Counter Current Mode

A preferred way of carrying out the method according to the present invention is to employ a counter current process set-up. Such a counter current process set-up will provide for substantial cost reductions when running several batches as the chemicals employed in the process are reused when running a later batch. When performing the counter current process, it is preferred that the seaweed to be introduced in the reaction medium is dry. Alternatively, means for reducing the volume of the upstream moving medium, such as evaporation means, maybe provided in order to establish the necessary reduction in volume of the upstream moving medium. The counter current mode will now be described briefly with reference to Fig. 5. However, complete directions of how to perform this reuse of chemicals by employing a counter current process is disclosed in Applicant's co-pending patent application No. WO...

In Fig. 5 a Lye Recovery Zone (LRZ) is introduced between the Reaction Zone (RZ) and the Further Work-Up Zone (FWZ). The Lye Recovery Zone comprises a number of tanks. A single step in the Lye Recovery Zone is also possible, but generally 2, 3 or 4 steps will usually be employed to provide for a sufficient recovery of the alkali and non-alkali salts employed in the Reaction Zone. In a start-up situation the aqueous liquids to be used in the tanks of the Lye Recovery Zone - in this application referred to as lye recovery solutions - may contain water having a high salt concentration. After running a number of batches a steady state situation will be approached, wherein each tank will contain a lye recovery solution having a concentration of alkali and other solutes which is less than in the liquid in the previous tank. It is essential that the lye recovery solution to be used has a salt concentration that will be sufficient to suppress the dissolution of the carrageenans and the disintegration of the seaweed. Again reference is made to the phase diagrams for information concerning such sufficient salt concentrations. As one may expect, from looking at the phase diagrams of fig. 2 and 3 a convenient and cost-efficient approach is to employ a lye recovery solution having no too high temperature.

In the Reaction Zone an aqueous alkaline medium situated in the reaction medium tank ($R_1$) having a specified alkali concentration and a specified salt concentration is transferred to the seaweed tank (SW) as indicated by the arrow (1) and the reaction is carried out on the seaweed for a time sufficient to modify the carrageenan to a desirable extent. Thereafter the used liquid is transferred back to the tank ($R_1$) as indicated by the arrow (2).

In the Lye Recovery Zone lye recovery solution is supplied from ($L_1$) to the seaweed tank (SW) as denoted by the arrow (3). The seaweed is processed for a suitable time. Because the seaweed in the reaction step has absorbed some of the alkaline solution fed to the seaweed by (1) the amount of alkali solution in ($R_1$) is less than originally. Thus, ($R_1$) is fed with the used lye recovery solution from the first lye recovery step in order to make up the original amount of alkali solution in ($R_1$) as indicated by the arrow (4). After this, the alkali strength and non-alkali salt concentration in ($R_1$) is adjusted to the original value by adding alkali and if needed, non-alkali salts as indicated by (5) (obviously, this adjustment does not have to take place at this particular point, but the adjustment has to be carried out before running the batch to come). The rest of the used lye recovery solution from the first lye recovering step is then recycled from the seaweed tank (SW) back to ($L_1$) as indicated by the arrow (6).

In the next step in the Lye Recovery Zone, lye recovery solution is supplied from ($L_2$) to the seaweed tank (SW) as indicated by the arrow (7). After processing for a suitable time the amount of lye recovery solution in ($L_1$) is then made up to its original value by feeding the used lye recovery solution from the second lye recovery step to ($L_1$) as indicated by the arrow (8). The rest of the used lye recovery solution from the second lye recovery step is then recycled to ($L_2$) as indicated by the arrow (9).

Repeated cycles of these lye recovery steps can be performed in a similar way, where part of the used lye recovery solution in a lye recovery step is transferred to the tank from which the lye recovery solution from the previous step originates, and where the rest of the used lye recovery solution in said lye recovery step is recycled to the tank from which it originates. This is indicated by the arrows (10), (11) and (12) for the n'th lye recovering step. As noted above, 2, 3 or 4 lye recovery steps will normally suffice. However, even only 1 lye recovery step as well as 5, 6 or more steps are contemplated. After the last lye recovery step the seaweed maybe further processed and fractionated in the Further Work-Up Zone (FWZ) as described in this application. This is denoted by the arrow (13). Due to the upstream movement of liquids in the system, the Tank (Ln) needs replenishing. The source of liquid to this replenishing may be completed by means of an external source of e.g. fresh lye recovery solution as denoted by (14).

When a number of batches have been processed a steady state will be approached in which the alkalinity and salt concentration in each lye recovery tank essentially remains constant during the continued processing of further batches.

Fractionation step(s)

When the reaction for modifying the carrageenan(s) is accomplished one or more fractionation steps are conducted in this preferred embodiment of the process according to the present invention in the Further Work-Up Zone (as it appears from Fig. 4) in order to extract the lambda-family carrageenans still present in the seaweed material.

The extraction medium is may be water or a salt solution.

However if a reaction medium having a relatively high content of sodium ions is utilised in the reaction step, and if water is used as extraction medium, the kappa-family carrageenan end product of the inventive method, i.e. the semirefined carrageenan (SRC-kappa) or the refined carrageenan (RC-kappa) may be a carrageenan product having to a very large extent sodium ions as counter ions to the sulphate groups. These types of carrageenans may for some purposes be less desirable due to its gelling characteristics. Thus, in such situations it is desirable to perform an ion exchange before obtaining the end product. Such an ion exchange is typically performed with a potassium salt, such as e.g. KCl or $K_2SO_4$, if the gelling carrageenan is kappa-carrageenan in order to obtain an end product having to a very high extent potassium ions as counter ions to the polymer sulphate groups.

In the event ion exchange is contemplated, the seaweed material may be submitted to at least one washing step - performed in the same way as the fractionation steps - with the exception, that the aqueous "extraction medium" in this case contains the ions needed for the ion exchange. Thus, one or more of the tanks containing the extraction medium may comprise a potassium salt in solution.

Sometimes it may be desirable to bleach the seaweed before further processing. This may be done by adding an oxidising agent, e.g. a hypochlorite or hydrogen peroxide to the wash solution, preferably in the last washing step.

Sometimes it may be desirable to make sure that all alkali has been washed out before the alkali treated kappa-family bearing seaweed is further processed to the kappa-carrageenan product(s). This may be done by treating the seaweed with a weak acidic solution in one of the fractionation steps, preferably the last fractionation step.

The temperature of the extraction medium depends on the type of seaweed source.

Generally a temperature in the range of 5 -70 °C, normally in the range of 10 - 50 °C is employed. However, a too high temperature that may result in solubilising the kappa carrageenans should be avoided.

Preferably repeating cycles of adding extraction medium, agitation and removal of used extraction medium are conducted in order to reach end products of desirable quality and satisfactory yields.

Further work-up to obtain SRC-kappa or RC-kappa

After the reaction step and the separation step the solid kappa-family containing material obtained after step 2) or the solid kappa-family containing fraction obtained after step 3) may be recovered and optionally further worked up in a manner known per se. Thus, the manufacture of semi-refined carrageenan (SRC) as well as refined carrageenan (RC) types of kappa-carrageenan products are possible in the process according to the present invention.

One method for the manufacture of refined carrageenan (RC) might be to conduct a traditional refining by extraction, i.e. to add water to the treated seaweed material, neutralize by means of acid in order to obtain a suitable pH and thereafter heating to dissolve the carrageenan contained in the seaweed, remove seaweed residues by suitable solid/liquid separation, precipitate the carrageenan selectively by e.g. isopropanol, dewater the precipitate, dry and grind.

Prior art discloses how part of the refining, for some seaweeds, may be preferentially carried out heterogeneously by washing. This implicitly makes it possible to produce, at a low cost, semi-refined carrageenan (SRC) which has never been dissolved (extracted) from the seaweed. For a more detailed description of the final processing reference is made to U.S. 5,801,240.

Further work-up to obtain RC-lambda

The lambda-containing extraction medium may be worked up in order to obtain a RC lambda product. This can be done by heating the extract and filtering through eg. a Perlite filter aid under vacuum. After filtration the filtrate volume may be reduced by use of evaporation. The solution may then after cooling be subjected to a precipitation with isopropanol. Then the fibrous material can be separated and pressed, dried and grinded to the lambda-RC product.

## Examples

### Determining Gelling Performance

In the subsequent examples the following performance grading method was used in order to determine the gelling performances of the obtained products.

The "grading methods" build on the principle that the grade value is proportional to the value of the functional performance of the product in the medium. Within every method we have to define one exact product sample as being *the standard,* having a grade strength = 100° (or other number, for that matter).

Consequently, if a new sample shows a grade strength of 50°, one needs double dosage in the medium to obtain the same performance as of the standard, i.e. the (commercial) value of the 50° sample is 50 % of the value of the 100° sample. In each of the performance grading methods as described below, measurements are made of the functional effect (e.g. gel strength or viscosity) at certain concentrations of sample (SRC or RC). These concentrations of sample ("target sample concentrations") are chosen empirically to give strengths close to a defined target whereby the "grades" may be calculated by intrapolation or extrapolation. The grade value is in principle inversely proportional to the needed sample concentration for giving a target functional effect in the medium and is defined in relation to a standard having a defined grade number, as mentioned above.

The "grades" may be obtained, on a sample dry matter basis, by multiplying by the term: 100 / (% D.M. in powder). D.M. (dry matter) being determined by drying the product in a drying cabinet for four hours at 105 °C, weighing before and after.

### Milk Gel strengths, °MIG-R and °MIG-B

This method is intended to reflect the product's gelling performance in milk dessert products and serves to calculate the grade strengths: °MIG-R (milk gel *rigidity* grade at 2 mm deformation) and °MIG-B (milk gel grade at *break* point).

Determination of Target Sample Concentrations

If the sample is expected to perform at for instance X °MIG-R, the amount in grams of sample powder, Y, to be used in the procedure below will be Y = 1.00 g * (100 / X). Thus, if for instance X = 100 °MIG-R, the powder amount should be 1.00 g and if for instance X = 50 °MIG-R, the powder amount should be 2.00 g. Two different sample concentrations $Y_1$ and $Y_2$ are chosen based on this, both close to the found value of Y, in order to enable a suitable intra- or extrapolation. Thus, the procedure described below will be performed for each sample concentration individually.

The product sample standard for this method is: GENULACTA Carrageenan P-100-J, lot no. 02 860-0 which is rated at 101 °MIG-R (determined at a target R value of 40.0 g) and 114 °MIG-B (determined at a target B value of 100 g). To be able to calculate the "grades" of the sample in relation to this standard, the procedure described below must be performed for two different sample concentrations individually, also for this standard sample.

Milk Gel Preparation

50.0 g of skim milk powder (MILEX 240, MD Foods Ingredients amba) and $Y_n$ g sample ($Y_n$ = a target concentration, to be determined as described above) are placed in a tared 1 liter glass beaker and the powders mixed with a spatula. 450 g of de-ionised water is added to the beaker under stirring. The mixture is heated to 68 °C in a water bath and kept at this temperature for 5 minutes while maintaining stirring. The contents of the beaker are then made up to a total weight of 500.0 g by means of adding de-ionised water and stirring to mix. The solution is then poured into two crystallisation dishes (diam. 70 mm, height 40 mm, each provided with adhesive tape on its vertical brims for extending the height of the dish to above 50 mm). The surface of the solution is to extend to approx. 10 mm above the glass brim of the dish while still being confined by the adhesive tape. The dishes are then placed in a thermostatised bath at 5 °C. After 2.5 hours in the cooling bath, gels have formed. The dishes are taken up, the adhesive tape removed from the brim and the the upper surface of the gel is cut level to the brim of the dish by means of a wire cheese slicer.

Gel Measurements

The gel modulus and rupture strength were measured on a SMS Texture Analyser Type TA-XT2 using a plunger diameter of 1 inch and a plunger velocity of 1 mm / sec. The *rigidity R* (modulus) is recorded as the plunger pressure at 2 mm depression of the gel surface. The *break B* (rupture) is recorded as the plunger pressure at the rupture of the gel. Each measurement is made on each of the two gel dishes and averaged ($R_{avg.}$ *and* $B_{ovg}$).

Computation of Grade Strengths

For both the sample and the standard, the concentration needed to give a defined target R value of 40.0 g is determined by intra- or extrapolating from the two $R_{avg}$ values obtained for each of the two products: sample resp. standard. These calculated concentrations are termed $YR_{SA}$ and $YR_{ST}$ respectively.
The °MIG-R is defined as: ($YR_{ST}$ * 101 / $YR_{SA}$) °MIG-R

Likewise, for a defined target B value of 100 g, the two concentrations $YB_{SA}$ and $YB_{ST}$ respectively are found. The °MIG-B is defined as: ($YB_{ST}$ * 114 / $YB_{SA}$) °MIG-B

**Chocolate Milk Viscosity, °CAM**

This method is intended to reflect the product's stabilising performance in hot process chocolate milk products and serves to calculate the cold chocolate milk viscosity grade strength: °CAM.

Determination of Target Sample Concentrations

If the sample is expected to perform at for instance X °CAM, the amount in grams of sample powder, Y, to be used in the procedure below will be Y = 100 mg * (100 / X). Thus, if for instance X =100 °CAM, the powder amount should be 100 mg and if for instance X = 50 °CAM, the powder amount should be 200 mg. Three different sample concentrations, $Y_1$, $Y_2$ and $Y_3$ are chosen based on this, all close to the found value of Y, in order to enable a suitable intra- or extrapolation. Thus, the procedure described below will be performed for each sample concentration individually.

The product sample standard for this method is: GENULACTA Carrageenan K-100, lot no. 82 070-1 which is defined at 107 °CAM (determined at a target viscosity of 30 cP). To be able to calculate the "grade" of the sample in relation to this standard, the procedure described below must be performed for three different sample concentrations individually, also for this standard sample.

Chocolate Milk Preparation

35.0 g of skim milk powder (MILEX 240, MD Foods Ingredients amba) and 350 g of de-ionised water are transferred to a tared 600 ml beaker and mixed well with a spatula. The beaker is then placed in a 74 °C water bath and constant agitation is applied.

4.8 g of cocoa (ADM cocoa, 10-12 % fat, type D-11-MR), 24 g of sugar and $Y_n$ g sample ($Y_n$ = a target

concentration, to be determined as described above) are placed in a tared 250 ml glass beaker and the powders mixed with a spatula. When the temperature of the reconstituted milk reaches 50 °C, the powder contents of the 250 ml beaker is transferred quantitatively to the milk. Heating is continued to reach a temperature of 68 °C at which temperature the sample is maintained for 15 minutes. The beaker is then transferred to a 5 °C cooling bath and cooled to 10 °C under stirring with a spatula. The net weight of the beaker contents are made up to 400.0 g by means of adding de-ionised water under thorough mixing, and the beaker is placed in a refrigerator (3-4 °C) overnight.

Viscosity Measurements

After 16-24 hours, the beaker is thermostatised to 5 °C in a water bath. After gently stirring the contents, approx. 170 ml of the chocolate milk is transferred to a viscosity glass (internal diam. 50 mm, internal height 110 mm). The viscosity is determined by means of Brookfield Viscometer LVF or LVT, using spindle no. 1, at 60 RPM and reading after 30 seconds of rotation. Subsequently, 2-4 additional readings are made until two subsequent readings differ less than 1.0 cP. The average viscosity $V_{avg}$ is determined. If the viscosity is outside the 20-50 cP range, the test is repeated with another sample concentration.

Computation of Grade Strength

For both the sample and the standard, the concentration needed to give a defined target chocolate milk viscosity of 30 cP at 5 °C is determined by intra- or extrapolating (semi-log plot) from the three $V_{avg}$ values obtained for each of the two products: sample resp. standard. These calculated concentrations are termed $Y_{SA}$ and $Y_{ST}$ respectively.
The °CAM is defined as: ($Y_{ST}$ * 107 / $Y_{SA}$) °CAM

**Water Viscosity, 75 °C, 1 % NaCl Solution, °λ, (wah)**

This method was developed to obtain a tentative measure of the molecular extension of carrageenans in a water solution. Thus, it should be giving indications about the carrageenan chains' molecular weight and rigidity in solution. It was inspired by the well known method introduced by the Food Chemicals Codex, for measuring the water solution viscosity at 75 °C with a 1.5 % carrageenan sample concentration. The medium in the present method was selected to have sufficiently high ionic strength to act as a buffer for the occurrence of variable residual salt contents of the sample. The resulting 1 % NaCl aqueous solution medium, moreover, has an ionic strength comparable to various food systems which makes the performance also directly related to an application relevant water thickening performance.
The method serves to calculate the hot water solution viscosity grade strength: °λ (wah).

Determination of Target Sample Concentrations

If the sample is expected to perform at for instance X °λ, (wah), the amount in grams of sample powder, Y, to be used in the procedure below will be Y = 1.89 g *(100 / X). Thus, if for instance X = 100 °λ (wah), the powder amount should be 1.89 g and if for instance X = 50 °λ (wah), the powder amount should be 3.78 g. A number (min. two) of different sample concentrations, $Y_1$, $Y_2$ ...$Y_n$ will be tested, however, all close to the found value ofY, in order to enable a suitable intra- or extrapolation. The $Y_1$, $Y_2$ ... $Y_n$ will be developed by successive dilution with an NaCl solution of same concentration and temperature as the test medium. Thus, the $Y_1$ should be chosen to give a viscosity above target, to allow subsequent dilution(s) to be made.
The product sample standard for this method is: GENUVISCO Carrageenan X-7055, lot no. 14 80 090-0 which is defined at 100 °1 (wah), on a sample dry matter basis and determined at a target viscosity of 60 cP. To be able to calculate the "grade" of the sample in relation to this standard, the procedure described below must also be performed for this standard sample.

1 % NaCl Solution Preparation

5.00 g NaCl, 450 g of de-ionised water and $Y_1$ g sample ($Y_1$ = the upper target concentration, to be determined as described above) are transferred to a tared 800 ml beaker provided with a magnetic stirring rod. The beaker is then placed in a 80 °C water bath and constant agitation is applied until 76-77 °C is reached. Final adjustment with de-ionised water to 500.0 g total solution weight. Cover to inhibit evaporation loss.
The viscometer spindle + metal guard, and another beaker with an auxiliary 1 % (w/w) NaCl solution, are heated to the same temperature as the above solution.

Viscosity Measurements

Viscosity is measured after 30 seconds of rotation, directly in the beaker, with Brookfield LVF or LVT, using the preheated spindle no. 1 + guard, at 60 RPM and at 75.0 +/- 0.2 °C. Subsequently, 2-3 additional readings are made until two subsequent readings differ less than 0.5 cP. The average viscosity $V_{1,avg}$ is determined. If the viscosity is lower than 60 cP, the test is repeated with another sample concentration. If the viscosity is higher than 100 cP, a suitable dilution with the auxiliary NaCl solution is made and the measurement is repeated to give $V_{1,avg}$ at this new concentration. Subsequently, a suitable dilution with the auxiliary NaCl solution is made and the measurement is repeated to give $V_{2,avg}$ at this new concentration. The procedure is continued until the last $V_{n,avg}$. is below 60 cP.

Computation of Grade Strength

For both the sample and the standard, the concentration needed to give a defined target viscosity of 60 cP at 75 °C is determined by intra- or extrapolating (semi-log plot) from the closest two $V_{avg}$ values obtained for each of the two products: sample resp. standard. These calculated concentrations are termed $Y_{SA}$ and $Y_{ST}$ respectively.
The °λ (wah) is defined as: ($Y_{ST}$ * 100 / $Y_{SA}$)°λ (wah)

**Instant Slurry Viscosity, 20 °C, Whole Milk, °λ (mic)**

This method is intended to reflect the product's thickening performance in cold instant milk products such as beverages, creams and aerated desserts and serves to calculate the grade strength: °λ (mic).

Determination of Target Sample Concentrations

If the sample is expected to perform at for instance X °λ (mic), the amount in grams of sample powder, Y, to be used in the procedure below will be Y = 266 mg * (100 /X). Thus, if for instance X = 100 °λ (wah), the powder amount should be 290 mg and if for instance X = 50 °λ (wah), the powder amount should be 580 mg. A number (min. two) of different sample concentrations, $Y_1$, $Y_2$ ...$Y_n$ will be tested, however, all close to the found value of Y, in order to enable a suitable intra- or extrapolation. The $Y_1$, $Y_2$ ... $Y_n$ will be developed by successive dilution with the same milk and at the same temperature as the test medium. Thus, the $Y_1$ should be chosen to give a viscosity above target, to allow subsequent dilution(s) to be made.

The product sample standard for this method is: GENUVISCO Carrageenan X-7055, lot no. 14 80 090-0 which is defined at 100 °λ (mic), on a sample dry matter basis and determined at a target viscosity of 30 cP. To be able to calculate the "grade" of the sample in relation to this standard, the procedure described below must also be performed for this standard sample.

Whole Milk Slurry Preparation

593 g of pasteurised 3.5 % fat milk is transferred to a tared 1,000 ml beaker (diam. 90 mm, height 180 mm) provided with a 3.8 cm long magnetic stirring rod. The beaker is then placed in a thermostatised 20 °C water bath and constant agitation is applied until 20 +/- 0.5 °C is reached. Final adjustment with milk to 600.0 g total solution weight. A fine mesh sample (US # 200 or DIN 80) of $Y_1$ g ($Y_1$ = the upper target concentration, to be determined as described above) is dispersed with a small spatula in 6 g glycerol on a spoon and dispersed quantitatively into the milk during stirring at 700 RPM. Stirring is continued at the same speed for 15 minutes before measuring.

Another beaker with an auxiliary milk portion of the same milk batch is kept thermostatised at the same temperature as the above solution.

Viscosity Measurements

After the 15 minutes, the viscosity of the milk slurry is measured after 30 seconds of rotation, directly in the beaker, with Brookfield LVF or LVT, using the spindle no. 1 + guard, at 60 RPM and at 20.0 +/- 0.5 °C. Subsequently, 2-3 additional readings are made until two subsequent readings differ less than 0.5 cP. The average viscosity $V_{1,avg}$ is determined. If the viscosity is lower than 30 cP or higher than 80 cP, the test is repeated with another sample concentration. A suitable dilution with the auxiliary milk solution is made and the measurement is repeated to give $V_{2,avg}$. at this new concentration. If $V_{2,avg}$. is above 55 cP, a suitable dilution with the auxiliary milk solution is made and the measurement is repeated to give $V_{2,avg}$.at this new concentration. The diluting and re-measuring procedure is continued until the last $V_{n,avg}$. is below 30 cP.

Computation of Grade Strength

For both the sample and the standard, the concentration needed to give a defined target viscosity of 30 cP at 20 °C is determined by intra- or extrapolating (semi-log plot) from the closest two $V_{avg}$ values obtained for each of the two products: sample resp. standard. These calculated concentrations are termed $Y_{SA}$ and $Y_{ST}$ respectively.
The °λ (mic) is defined as: ($Y_{ST}$ * 100 / $Y_{SA}$) °λ (mic)

**Example 1**

This example illustrates how the Viscosity Diagram of Fig. 1 and the Phase Diagram of Fig. 2 were constructed.
Approximately 10 kg of GBL-10 seaweed (75 - 80 % solids) was chopped into pieces of sizes of 2 - 4 cm. These pieces were mixed thoroughly. 201 of a alkali stock solution containing 5 % (w/v) NaOH and 1 % (w/v) KCl was then prepared. This alkali stock solution was kept at room temperature. A series of solutions of NaCl was prepared on the basis of the above alkali stock solution. These NaCl solutions had a NaCl concentration of 0, 5, 10, 15, 20 and 25 % (w/v) respectively. These solutions were also kept at room temperature.
For each of the above six alkali solutions 1.8 1 thereof was filled into a 3 1 beaker mounted on a heating plate provided with a laboratory agitator (crossbar propeller; Ø: 50 mm) running at 240 rpm. Each solution was heated to 60 °C and 140 g chopped seaweed was added so as to obtain complete soaking of the seaweed. To each beaker was added NaOH/KCl/NaCl solution having the NaCl concentration in question to make up a total volume of 2.01. Each suspension was reheated to 60 ° C and kept at this temperature for 30 min. Then heating was increased so as to obtain an increase of approximately 2 ° C per 5 min. At every 5 ° C interval the following observations were made:

- visual observation: disintegration, colouring, dissolution;

- viscosity measurements: a liquid sample was collected at the temperature in question. This was filled in a viscosity glass (internal Ø:50 mm, height: 115 mm). The viscosity was measured with a Brookfield LVT viscometer after 30 sec. of rotation (spindle 1).

The viscosity readings are listed in Table 2 below.
In the far right column, the "threshold concentration of NaCl" is estimated for each measured temperature as being the minimum NaCl concentration needed for avoiding dissolution of carrageenan, as indicated by a rising solution viscosity reading. In all cases, the visual observation of incipient disintegration of the seaweed material came at, or below, the above mentioned "threshold NaCl concentration". Fig. 1 is a graphical illustration of the data from table 2. It should be noted that the graph corresponding to the values of 5 % and 0 % of NaCl respectively could not be made due to excessive disintegration of the seaweed and dissolution of the carrageenan.

**Table 2 - Viscosity of lye after alkali treatment of GLB-10 seaweed**

| Temperature (°C) | Viscosity of lye (Cp) at various concentrations of NaCl (listed in % (w/v)) | | | | | Threshold concentration of NaCl (% (w/v)) |
|---|---|---|---|---|---|---|
| | 30 % NaCl | 25 % NaCl | 20 % NaCl | 15 % NaCl | 10 % NaCl | |
| 60 | 3.4 | 5.2 | 8.5 | 11.0 | 92.5 | 16 |
| 65 | 3.4 | 5.1 | 9.3 | 15.0 | >100.0 | 18 |
| 70 | 3.5 | 5.4 | 10.9 | 46.0 | - | 20 |
| 75 | 4.5 | 5.2 | 12.6 | 81.5 | - | 22 |
| 80 | 4.5 | 5.0 | 18.8 | >100.0 | - | 24 |
| 85 | 4.3 | 6.0 | 35.3 | - | - | 25 |
| 90 | 5.0 | 7.6 | 61.0 | - | - | 26 |
| 92 | 4.9 | 9.0 | >100.0 | - | - | 26 |
| 93 | 5.1 | 10.5 | - | - | - | 27 |
| 94 | 5.1 | 13.8 | - | - | - | 27 |
| 95 | - | - | - | - | - | 28 |

**Example 2**

This example will serve to explain the whole pilot scale trial procedure which may be divided into the following three main steps:

1. Alkaline treatment.
2. Washing and lambda extraction from treated seaweed.
3. Work-up of the kappa and lambda fractions.

In this example, as in all subsequent examples, we used NaOH as the alkali and an alkaline treatment time of 2.5 hours. In the present example we used the seaweed GSK and used the salt NaCl as the major non-alkali salt.

1. Alkaline treatment

An alkaline treatment liquid was prepared as a stock solution with 5 % (w/v) NaOH, 23 % (w/v) NaCl and 1 % (w/v) KCl. The NaOH was fist dissolved at high temperature and subsequently the salts were dissolved. From the solution which was kept at room temperature, a suitable portion was heated to 63 °C in a cooking vessel and approx. 38 litre of it was deposited in the "reactor". The reactor was a jacketed vessel with a total volume of approx. 50 litre, provided with a lid and with a conical bottom outlet and an outlet valve.
An amount of 3.5 kg dry seaweed (75-80 % dry matter) was transferred to the reactor and soaked completely in the liquid. Subsequently, the liquid level was adjusted up to 40 litre. by means of additional alkaline liquid.
The alkaline treatment time was 2.5 hours during which the contents of the reactor were stirred occasionally and the temperature maintained constant at 60 °C +/- 1°C. After the treatment, the seaweed is observed visually for signs of exudation of gel and the treatment liquid checked for viscosity, at 20 °C. In all cases (in the subsequent examples), the seaweed stayed integral and the liquid viscosity was low, below 10 cP.
After completion of the treatment time, (and to reproduce the effect of conducting a lye recovery by means of a counter current recovery system see applicant's co-pending application No. WO ...), the treatment liquid was diluted and cooled in the following way: 24 litre of the treatment liquid was tapped from the bottom valve and discarded. Thereafter, the rest of the treatment liquid was tapped, diluted with 24 litre of 10 °C cold tap water and added back to the reactor. The contents of the reactor were mixed and left to stand, without heating, for a period of 20 minutes during which time the contents of the reactor were stirred occasionally. The reactor temperature under these circumstances became approx. 30 °C.
After completion of this period, the seaweed was observed visually for signs of exudation of gel and the treatment liquid observed visually for viscosity and signs of disintegrated seaweed residues. The diluted treatment liquid was tapped out and discarded. The wet, treated and drained seaweed was taken out, weighed and the swelling factor determined (wet output weight divided by dry original input weight).

2. Washing and lambda extraction from the treated seaweed

The wet treated seaweed was transferred to one chamber of the "extractor". The main part of the extractor was a cylindrical rotating barrel, divided into three individual chambers, each of a volume of approx. 100 litre and provided with peripheral baffles for providing mechanical action. To provide additional mechanical impact, a rubberised sandbag of approx. 2 kg was also provided. Furthermore, each chamber was provided with an inspection door for input and output of seaweed and peripheral outlet stubs for liquid, each provided with a seaweed retaining grid and a valve. The extractor is originally designed for tumbling of cured meat: "Fomaco vacuum tumbler in trisection", supplier: Food Machinery Company A/S, Køge, Denmark.
A washing/extraction liquid (or extraction medium) was prepared with 1.0 % (w/v) KCl in tap water and heated to approx. 45 °. An amount of 30 ltr. of the washing/extraction liquid was transferred to the reactor and the rotation started at the max. revolutions (14 rpm). The tumbling treatment was continued for 40 minutes after which time the liquid was tapped from the reactor and kept.
The second washing/extraction step was carried out like described above, using new washing/extraction liquid.
The third washing/extraction step was also carried out like described above, however, in this step dilute sulphuric acid was added gradually until pH was reduced to 8.5 -9.0 in order to neutralise the residual alkali in the kappa seaweed.
All three portions of spent extraction liquid were eventually poured together into one portion: the lambda extract liquid.
The washed, extracted, neutralised and drained kappa-family containing seaweed was removed from the reactor. In some cases (in the subsequent examples), neutralisation was not done in the last lambda extraction step for practical reasons, but instead in a subsequent step where the kappa-family seaweed was slurried in 80 % iso-propanol and neutralised to pH 8.0 - 8.5 by adding sulphuric acid, and then finally drained. The product from the mentioned steps was termed: wet "SRC-kappa".

3. Work-up of the kappa and lambda fractions

The wet SRC-kappa seaweed was finally subjected to drying in a drying cabinet provided with circulating drying air at 60-70 °C, until dry. After this, it was weighed, the dry matter content measured and the rest of the material subjected to grinding to obtain a powder that passes a 250 micron sieve (US # 60 or DIN 24). The resulting powder was termed dry "SRC-kappa" and had a dry matter content of approx. 95 % (w/w).

The dry SRC-kappa from the above mentioned procedure was used as raw material for the preparation of the refined kappa fraction: the RC-kappa , in the following way: An amount of 200 g of dry SRC-kappa was transferred to a steam jacketed cooking vessel with a total volume of approx. 20 litre and provided with an agitator. Tap water was introduced until reaching a total volume of 18 litre. The contents of the vessel were heated to 95 °C with constant agitation and then kept without agitation at the same temperature for an additional 2 hours. The hot kappa extract liquid was then filtered hot on a Perlite filter aid layer with vacuum applied. After filtering the total amount, the filter cake was flushed with hot water which was added to the filtrate. The total filtrate was then cooled to ambient temperature and precipitated with 80 % (w/w) iso-propanol, also at ambient temperature, using the volume ratio of approx. 1:3. The fibrous precipitate was separated, pressed and washed now in 60 % (w/w) iso-propanol and with a third of the originally used amount. The washed precipitate was then pressed again and dried in a drying cabinet provided with circulating drying air at 60-70 °C, until dry. After this, it was weighed, the dry matter content measured and the rest of the material subjected to grinding to obtain a powder that passes a 250 micron sieve (US # 60 or DIN 24). The resulting powder was termed: "RC-kappa"and had a dry matter content of approx. 95 % (w/w).

The lambda extract liquid was heated to approx. 60 °C and filtered hot on a Perlite filter aid layer with vacuum applied. After filtering the total amount, the filter cake was flushed with hot water which was added to the filtrate. The total filtrate was then subjected to evaporative concentration under vacuum to reach approx. 1/3 of the original volume. The concentrate was then cooled to ambient temperature and precipitated with 80 % (w/w) iso-propanol, also at ambient temperature, using the volume ratio of approx. 1 : 3. The fibrous precipitate was separated, pressed and washed now in 60 % (w/w) iso-propanol and with a third of the originally used amount. The washed precipitate was then pressed again and dried in a drying cabinetprovided with circulating drying air at 60-70 °C, until dry. After this, it was weighed, the dry matter content measured and the rest of the material subjected to grinding to obtain a powder that passes a 75 micron sieve (US # 200 or DIN 80). The resulting powder was termed: "lambda fraction" and had a dry matter content of approx. 95 % (w/w).

For being able to compare the carrageenan qualities ("grades") and the relative carrageenan amounts obtained from the seaweed ("yields") between the process of the invention and a conventional process, a form of a conventional process, resulting in a co-extract (co-ex) product containing both kappa and lambda components was also carried out, as described below:

An amount of 200 g of dry seaweed (75-80 % dry matter content) was transferred to a steam jacketed pressure-cooking vessel with a total volume of approx. 20 litre and provided with an agitator. 40 g of $Ca(OH)_2$ was added together with 10 litre of tap water. The cooking vessel was closed and the contents of the vessel were heated to 110°C and then kept with agitation at the same temperature for 35 minutes. Thereafter, the vessel was cooled to 95 °C, vented and kept without agitation at the same temperature for 18 hours. The hot extract liquid was then neutralised to pH 8.5-9.0 by means of bubbling $CO_2$ through the extract liquid and filtered hot on a Perlite filter aid layer with vacuum applied. After filtering the total amount, the filter cake was flushed with hot water which was added to the filtrate. The total filtrate was then cooled to ambient temperature and precipitated with 80 % (w/w) iso-propanol, also at ambient temperature, using the volume ratio of approx. 1:3. The fibrous precipitate was separated, pressed and washed now in 60 % (w/w) iso-propanol and with a third ofthe originally used amount. The washed precipitate was then pressed again and dried in a drying cabinet provided with circulating drying air at 60-70 °C, until dry. After this, it was weighed, the dry matter content measured and the rest of the material subj ected to grinding to obtain a powder that passes a 250 micron sieve (US # 60 or DIN 24). The resulting powder was termed: "Co-ex RC" and had a dry matter content of approx. 95 % (w/w).

The results are seen in table 3. The swell factor of the wet SRC-kappa before lambda extraction was 3.6. We note that the "kappa grades" ofthe RC-kappa are approx. equal to the ones of the co-extract. The total yields from the two compared processes seem to be equal.

**Table 3**

| Example no. | Fraction | Carrageenan yield* on seaweed* % (w/w) (dry matter content) | Lambda viscosity grades* | | Kappa grades* | |
|---|---|---|---|---|---|---|
| | | | 75 °C water °λ (wah) | 20 °C milk °λ (mic) | Milk gel strength ° MIG-R | Chocolate milk viscosity °CAM |
| 2 (Trial no. 94/63B with GSK) | SRC-kappa | 60.5 | | | 74.3 | 150 |
| | Lambda | 11.5 | 17.4 | 71 | | |
| | RC-kappa | 43.7 | | | 100.2 | 196 |
| | Total RC | 55.2 | | | | |
| | Co-extract | 55.2 | | | 107 | 202 |
| 3 (Trial no. 65/75 with GBL-10) | SRC-kappa | no data | | | no data | no data |
| | Lambda. | 12.4 | 31.1 | 109 | | |
| | RC-kappa | 29.7 | | | 87 | 188 |
| | Total RC | 42.1 | | | | |
| | Co-extract | 44.1 | | | 66 | 163 |
| 4 (Trial no. 65/75 with GBL-8) | SRC-kappa | no data | | | no data | no data |
| | Lambda. | 12.8 | 29.8 | 100 | | |
| | RC-kappa | 28.7 | | | 92 | 169 |
| | Total RC | 41.5 | | | | |
| | Co-extract | 45.1 | | | 58 | 147 |
| 5 (Trial no.65 / 75 with GNL) | SRC-kappa | no data | | | no data | no data |
| | Lambda. | 7.1 | 17.0 | 34 | | |
| | RC-kappa | 28.0 | | | 93 | 177 |
| | Total RC | 35.1 | | | | |
| | Co-extract | 42.1 | | | 80 | 140 |
| 6 (Trial no. 105 / 107 with Chondrus PEI) | SRC-kappa | 49.9 | | | 90 | 83 |
| | Lambda. | 12.5 | 13.1 | 43 | | |
| | RC-kappa | 21.8 | | | 190 | 172 |
| | Total RC | 34.3 | | | | |
| | Co-extract | 37.6 | | | 149 | 163 |
| 7 (Trial no, 106 / 107 with Chondrus NS) | SRC-kappa | 67.8 | | | 172 | 123 , |
| | Lambda. | 10.6 | - | - | | |
| | RC-kappa | 34.3 | | | 205 | 18) |
| | Total RC | 44.9 | | | | |
| | Co-extract | 37.2 | | | 194 | 249 |
| 8 (Trial no. 102 / 119 with GBL-8) | SRC-kappa | 39.5 | - | | 68 | 145 |
| | Lambda. | 21.6 | 16.4 | 54 | | |
| | RC-kappa | 26.7 | | | 80 | 159 |
| | Total RC | 48.3 | | | | |
| | Co-extract | 46.2 | | | 45 | 115 |
| 9 | SRC-kappa | 53.5 | | | 46.7 | 108 |
| | Lambda. | 13.8. | 22.9 | 74 | | |

(continued)

| Example no. | Fraction | Carrageenan yield* on seaweed* % (w/w) (dry matter content) | Lambda viscosity grades* | | Kappa grades* | |
|---|---|---|---|---|---|---|
| | | | 75 °C water °λ (wah) | 20 °C milk °λ (mic) | Milk gel strength ° MIG-R | Chocolate milk viscosity °CAM |
| (Trial no. 94/63B with GSK) | RC-kappa | 38.1 | | | 67.7 | 144 |
| | Total RC | 51.9 | | | | |
| | Co-extract | 55.2 | | | 107 | 202 |
| 10 (Trial no 95. with GBL-10) | SRC-kappa | 51.0 | | | 44 | 97 |
| | Lambda. | 14.5 | 35.1 | 100 | | |
| | RC-kappa | 33.6 | | | 64 | 134 |
| | Total RC | 48.1 | | | | |
| | Co-extract | no data | | | no data | no data |
| *on dry matter basis | | | | | | |

**Example 3**

This example follows closely the procedure as described for example 2 with the following exceptions: the seaweed used is GBL-10. The results are seen in table 3. The swell factor of the wet SRC-kappa before lambda extraction was 6.8. We note here that the "kappa grades" of the RC-kappa are considerably higher than the ones of the co-extract. The total yields from the two compared processes seem to be approximately equal.

**Example 4**

This example follows closely the procedure as described for example 2 with the following exceptions: the seaweed used is GBL-8. The results are seen in table 3. The swell factor of the wet SRC-kappa before lambda extraction was 6.8. We note here that the "kappa grades" of the RC-kappa are considerably higher than the ones of the co-extract. The total yields from the two compared processes seem to be approximately equal.

**Example 5**

This example follows closely the procedure as described for example 2 with the following exceptions: the seaweed used is GNL. The results are seen in table 3. The swell factor of the wet SRC-kappa before lambda extraction was 4.4. We note here that the "kappa grades" of the RC-kappa are considerably higher than the ones of the co-extract. The total yield from the process of the invention is lower than from the conventional type process. This could be explained by the high demand for this seaweed type for high salt concentration during alkaline treatment (and preferably based on KCl instead of NaCl) as illustrated by figs. 2 and 3: a dissolution (and loss) of carrageenan, presumably lambda carrageenan, may have taken place during the dilution step after the alkaline treatment. Also kappa seaweed integrity problems may have arisen during the lambda extraction steps, causing a content of kappa carrageenan in the lambda fraction as indicated by an infra-red diagram of the lambda fraction (absorption at 930 $cm^{-1}$) and possibly causing a relatively low lambda grade (cold milk thickening effect), see table 3.

**Example 6**

This example follows closely the procedure as described for example 3 with the following exceptions: the seaweed used is Chondrus PEI. The results are seen in table 3. The swell factor of the wet SRC-kappa before lambda extraction was 2.5. We note here that the "kappa grades" of the RC-kappa are somewhat higher than the ones of the co-extract. The total yields from the two compared processes seem to be approximately equal.

**Example 7**

This example follows closely the procedure as described for example 3 with the following exceptions: the seaweed used is Chondrus NS and the lambda extraction liquid temperature was 25 °C. The results are seen in table 3. The swell factor of the wet SRC-kappa before lambda extraction was 2.7. We note here that the "kappa grades" of the RC-kappa are rather comparable the ones of the co-extract. The total yield from the process of the invention is higher than from the conventional type process. This could be explained by a high contamination of the lambda fraction (coprecipitated salts) as also indicated by chemical analyses. This is supported by the fact that no viscosity grades could in practice be measured on the lambda sample.

**Example 8**

This example follows closely the procedure as described for example 4 with the following exceptions: 24 % (w/v) KCl was used during alkaline modification instead of 23 % (w/v) NaCl + 1 % (w/v) KCl and the lambda extraction liquid temperature was 40 °C instead of 30 °C. The results are seen in table 3. The swell factor of the wet SRC-kappa before lambda extraction was 2.4 which is much lower than the swell factor of 6.8 that was obtained in example 4, and reflects the predominance of $K^+$ ions. This is an important aspect when contemplating to use a counter current recovery system for building up salt concentrations in the reaction step (see Applicant's co-pending application no WO...). As in example 4, although using another lot of GBL-8, we note that the "kappa grades" of the RC-kappa are considerablyhigher than the ones of the co-extract. The total yields from the two compared processes seem to be approximately equal. In this trial we obtained an exceptionally high lambda yield amounting to 45 % of the total, however, the "lambda grades" obtained were lower than in example 4. It is noted that the $K^+$ ion predominance in this trial seems to have no inhibiting effect on the total lambda extraction yield.

**Example 9**

This example follows closely the procedure as described for example 2 with the following exceptions: 1.5 % (w/v) NaOH was used during alkaline modification instead of 5 % (w/v) NaOH. The results are seen in table 3. The swell factor of the wet SRC-kappa before lambda extraction was 3.0 which is comparable to example 2. Seaweed integrity throughout the process was observed to be satisfactory. Compared to example 2, and using the same lot of GSK, we note that the "kappa grades" of the RC-kappa and SRC-kappa are considerably lower, due to the incomplete alkaline modification obtained from using only 1.5 % NaOH for alkaline modification. The total yields from the three compared processes (example 2+9) seem to be approximately equal. The lambda yield and the "lambda grades" obtained were approximately equal to those obtained in example 2.

**Example 10**

This example follows closely the procedure as described for example 3 with the following exceptions: 1.5 % (w/v) NaOH and 16 % (w/v) KCl + 8 % (w/v) NaCl were used during alkaline modification instead of 5 % (w/v) NaOH and 23 % (w/v) NaCl + 1 % (w/v) KCl. The results are seen in table 3. The swell factor of the wet SRC-kappa before lambda extraction was 2.5 which is much lower than the swell factor of 6.8 that was obtained in example 3, and reflects the predominance of $K^+$ ions. Seaweed integrity throughout the process was observed to be satisfactory. Compared to example 3, though not using the same lot of GBL-10, we note that the "kappa grades" of the RC-kappa are considerably lower, due to the incomplete alkaline modification obtained from using only 1.5 % NaOH for alkaline modification. The total yields from the three compared processes (example 2 and 9) seem to be approximately equal. The lambda yield and the "lambda grades" obtained were approximately equal to those obtained in example 3.

**Example 11**

As indicated in examples 9 and 10, some reduction in the "kappa grades" occurs for the tested seaweeds when the concentration of the alkali used for the alkaline modification process is reduced from 5 % (w/v) to 1.5 (w/v). Such reduction may be desired in certain applications as it is often counterbalanced by enhanced organoleptic properties, known e.g. as "body" and "mouthfeel". Presumably, the mentioned reduction is due to incomplete de-sulphatation of C-6 of the $\alpha$-D galactose monomer forming part of the repeating units of the kappa-iota hybrid carrageenan chains. A similarly reduced C-6 de-sulphation of the corresponding monomer forming part of the lambda carrageenan chains would be expected to give a reduction in molecular extension in solution, such as tentatively reflectable in the °$\lambda$ (wah) parameter, see table 3. In fact, when comparing example 9 with example 2 and example 10 with example 3, such reduction is indeed indicated, however, it is seemingly not dramatic. The other parameter °$\lambda$ (mic) which is related to instant thickening effect in cold milk shows no corresponding change, however.

In light of the indications mentioned above, a series of different concentrations of the alkali (NaOH) used for the alkaline modification process was tested out on two small lots acquired commercially, of manually sorted Gigartina lambda plants: GSK-1 and GBL-1. The experimental procedure was following the general steps as outlined in example 2 and is described briefly below:

Alkaline treatment

Alkaline treatment liquids were prepared as stock solutions, all with 23 % (w/v) NaCl and 1 % (w/v) KCl but having a range of different concentrations of NaOH: see table 4. (Note: In the case of 0 % NaOH, the pH of the treatment liquid was adjusted at the start of the process to pH 9.5 by means of $Na_2CO_3$ to prevent carrageenan degradation). The NaOH was first dissolved at high temperature and next the salts were dissolved. From the solutions which were kept at room temperature, a suitable portion was heated to 63 °C in a cooking vessel and approx. 17 ltrs. of it was deposited in the "reactor". The reactor was a thermostate controlled steam jacketed cooking vessel with a total volume of approx. 20 litre and provided with an agitator and a conical bottom outlet with valve.

An amount of 450 g dry lambda seaweed (75-80 % dry matter) was transferred to the reactor and soaked completely in the liquid. Subsequently, the liquid level was adjusted up to 18 litre by means of additional alkaline liquid. The alkaline treatment time was 2.5 hours during which the contents of the reactor was stirred occasionally and the temperature maintained constant at 60 °C +/- 1 °C.

After completion of the treatment time, the treatment liquid was diluted and cooled in the following way: 10.8 litre of the treatment liquid was tapped from the bottom valve and discarded. Thereafter, the rest of the treatment liquid was tapped, diluted with 10.8 litre of 10 °C cold tap water and added back to the reactor. The contents of the reactor were mixed and left to stand, without heating, for a period of 20 minutes during which the contents of the reactor were stirred occasionally.
The diluted treatment liquid was tapped and discarded while the wet treated seaweed was kept in the reactor.

Lambda extraction and work-up

A washing/extraction liquid was prepared with 1.0 % (w/v) KCl in tap water and heated to approx. 45 °. An amount of the washing /extraction liquid was transferred to the reactor to reach the 18 litre level and the agitator started at maximum speed. Extraction was continued for 20 minutes after which time the liquid was tapped from the reactor and kept while the wet treated seaweed was kept in the reactor.

The second and third washing/extraction steps were carried out like described above, using new washing/ extraction liquid and finally, all three portions of spent extraction liquid were eventually poured together into one portion: the lambda extract liquid. The solid extracted lambda seaweed residue was discarded.

The lambda extract liquid was finally worked up to a powder as described in example 2, and the "lambda grades" measured on each sample.

The results are shown in table 4 and on fig. 6. From the data obtained from the two different seaweeds it is clearly confirmed that the molecular extension, as tentatively reflected by the °λ. (wah) parameter, declines when alkaline treatment strength is raised, at least in the region from 0 and up to 2 % (w/v) NaOH but that it becomes approximately constant for NaOH concentrations between 2 and 5 % (w/v).

The corresponding °λ (mic) parameter also show a change in the region from 0 and up to 2 % (w/v) NaOH and becomes approximately constant forNaOH concentrations between 2 and 5 % (w/v).

This means with all probability, that even stronger alkaline solutions (> 5 % (w/v) NaOH) may be used without further significant impact on neither molecular extension nor cold milk thickening effect, at the chosen treatment temperature of 60 °C.

It is also clear from fig. 6 that the °λ (wah) and the °λ (mic) show inverse trends when having been treated in the region from 0 and up to 2 % (w/v) NaOH, and also if comparing between the two different seaweeds.

It should be noted that it is not clear by this what is the most relevant value-indicative quality parameter for the lambda fraction, whether it is °λ (wah) or °λ (mic) or some entirely different parameter. Or whether several quality parameters exist, each being relevant for specific applications and, thus, useful value-indicators.
These observations serve to indicate that the method of the invention would enable the user to produce a series of different, potentially valuable lambda products directly from different alkaline treatments of the mixture seaweed which in turn also would give a series of different, potentially valuable kappa products.

When examining the "lambda grades" in table 3, a great diversity maybe noted. When comparing to the data from the present example (table 4), a certain difference in average levels may be indicated, in favour of the sorted Gigartina lambda plants. It is unknown at this stage, however, whether this is due only to arbitrary differences in the seaweed sample origins or whether it may be related to the practiced pilot fractionation process of the invention.

**Table 4**

| Trial No. | | 86. GSK-lambda | | 88. GBL- lambda | |
|---|---|---|---|---|---|
| Trial Sub No. | NaOH % (w/v) | °λ | | | |
| | | (wah) | (mic) | (wah) | (mic) |
| 1 | 0 | 95.8 | 88 | 69.5 | 96 |
| 2 | 0.5 | 83.5 | 95 | 61.3 | 106 |
| 3 | 1 | 70.3 | 104 | 55.2 | 110 |
| 4 | 2 | 55.1 | 108 | 40.7 | 126 |
| 5 | 3 | 54.4 | 111 | 41.4 | 125 |
| 6 | 4 | 59.6 | 114 | 31.0 | 125 |
| 7 | 5 | 60.8 | 115 | 31.4 | 123 |

**Example 12**

In this example GSK seaweed was processed in a batch type process similar to the set-up in fig. 5, however, the process comprised one reaction step, four lye recovery steps, and only one cross current washing step (not shown on fig. 5). The reactor had a volume of 6 $m^3$ and each of the storage tanks had a volume of 20 $m^3$. The temperature of the reaction medium was 60 °C, the concentration of alkali was 5 % (w/v) NaOH and the treatment time was varied between 1 and 3 hours during the trial. Other parameter values from the start-up situation appear from table 5 below.

**Table 5**

| Start-up Concentrations in Various Storage Tanks (% (w/v)) | | | |
|---|---|---|---|
| Storage Tank | NaOH | NaCl | KCl |
| Reaction Medium Storage Tank | 5 | 29 | 1 |
| Spent Lye Buffer Tank | 4.4 | 29 | 1 |
| 1st Lye Recovery Storage Tank | 3.5 | 23 | 1 |
| 2nd Lye Recovery Storage Tank | 2.6 | 18 | 1 |
| 3rd Lye Recovery Storage Tank | 1.7 | 12 | 1 |
| 4th Lye Recovery Storage Tank | 0.8 | 6 | 1 |
| Washing Liquid Storage Tank | 0 | 0 | 1 |

Trial Procedure

The Heterogenous Reaction

400 kg GSK seaweed (70 - 75 % solids) was introduced into a rotating perforated drum reactor and the reactor was filled with 5 % (w/v) NaOH solution from the tank containing
the reaction medium. The reaction proceeded in 1 - 3 hours during which time the temperature was maintained at 60°C

After completion of the reaction time the spent lye solution was pumped into a buffer tank from which it was transferred, at intervals, to a mixing tank where new NaOH pellets and lye recovery liquid was added before eventually being transferred back to the reaction medium storage tank. In this way the alkali solution in the reaction medium storage tank was maintained at 5.0 % (w/v).

The Lye Recovery

1st lye recovery step: Liquid from the 1st lye recovery storage tank, which was maintained at approx. 25 °C, was then filled into the reactor to reach the 6,000 ltr. level. The perforated drum was rotating in 10 minutes of contacting time. Then part of this lye recovery liquid was transferred upstream to the mixing tank mentioned above to compensate for the liquid deficiency created by the dry seaweed's absorption of reaction medium, and the rest of the lye recovery liquid was recycled to the tank of the 1st lye recovery section.

2nd lye recovery step: Liquid from the 2nd lye recovery storage tank, which was maintained at approx. 20 °C, was filled into the reactor and again 10 minutes of contacting time under rotation was employed. Then part of this recovery liquid was transferred upstream to the tank of the 1st lye recovery section to compensate for the liquid deficiency created there, and the rest was recycled to the tank of the 2nd lye recovery section.

The 3rd and the 4th lye recovery step was conducted in the same way as described for the 2nd lye recovery step.

The Extractions

After completing the lye recovery procedures the seaweed was washed. This was done by introducing liquid from the extraction medium storage tank which was maintained at approx. 20 °C, into the reactor until reaching the 6,000 ltr. level. The perforated drum was rotating for 20 min. while first sodium hypochlorite and second sulphuric acid was added in order to achieve a bleaching & neutralisation to a pH of about 8.5 of the kappa seaweed fraction and a breakdown of the lambda solution fraction. Then part of this extraction medium was transferred upstream to the tank of the 4th lye recovery section to compensate for the liquid deficiency created there, and the rest was pumped to the drain.

Work-up of SRC-kappa

Certain of the wet SRC-kappa fractions batches were then chopped and submitted to air drying to obtain a residual humidity of 3 - 8 %. The dried material was ground to a particle size that allows passage through a 250 micron mesh screen. The final product is termed SRC and has a residual water content of approximately 5 %.

Work-up of RC-kappa

The rest of the wet SRC-kappa fraction batches were refined by extraction in water at 95 °C, filtration with Perlite to obtain a transparent filtrate, cooling, gelation by the introduction of KCl to obtain a concentration in the gel of about 1 % (w/v) KCl and gel pressing to remove the majority of the water content of the gel. The gel press cake was dried and ground to a particle size that allows passage through a 250 micron screen. The final product is termed RC and has a residual water content of approximately 5 %.

Results

The results from the trial are seen in table 6.

**Table 6**

| Batch no. | Reaction Medium | | | Prod. Type | Kappa grade |
|---|---|---|---|---|---|
| | Density g/ml | Dry Matter % (w/w) | Visc., 25°C 12.5cP | | Dry Matter Basis °CAM |
| 1 | 1.21 | | 6.5 | RC | 194 |
| 2 | | | | RC | |
| 3 | 1.2 | | 63 | RC | |
| 4 | | | | RC | |
| 5 | | | | RC | |
| 6 | | | | RC | 218 |
| 7 | | | | RC | |
| 8 | | | | SRC | |
| 9 | | | | SRC | 203 |
| 10 | | | | RC | |
| 11 | | | | RC | |
| 12 | 1.19 | | 312 | RC | 219 |
| 13 | | | | RC | |
| 14 | | | | RC | |
| 15 | | | | RC | |
| 16 | | | | RC | |
| 17 | | | | SRC | 130 |
| 18 | | | | RC | |
| 19 | | | | RC | |
| 20 | | | | RC | 209 |
| 21 | 1.19 | 24.7 | 1600 | RC | |

(continued)

| Batch no. | Reaction Medium | | | Prod. Type | Kappa grade |
|---|---|---|---|---|---|
| | Density g/ml | Dry Matter % (w/w) | Visc., 25°C 12.5cP | | Dry Matter Basis °CAM |
| 22 | | | | RC | 205 |
| 23 | | | | RC | |
| 24 | | | | RC | |
| 25 | | | | SRC | 132 |
| 26 | | | | RC | |
| 27 | | | | SRC | 147 |
| 28 | | | | RC | |
| 29 | | | | RC | 213 |
| 30 | 1.2 | 27.9 | 6800 | RC | |
| 31 | | | | RC | |
| 32 | | | | RC | |
| 33 | | | | RC | 197 |
| | | | | RC | |
| 34 | | | | | |
| 35 | | | | SRC | 121 |

The overall yield ofRC-kappa amounted to approx. 37 % on the seaweed, both on dry matter basis. Samples taken from the spent wash liquid showed an alcohol-precipitatable content of approx. 0.7 % which majorily consisted of lambda carrageenan.

It is noted that the density is approximately constant throughout the trial, indicating that the total solute concentration level defined for the start-up situation was majorily maintained during the trial, indicating essentially a steady-state situation. It is also noted that the viscosity of the reaction medium has a rising tendency, presumably in part due to the upstream transfer of part of the spent washing liquid which contained lambda carrageenan.

When comparing the "kappa grade", measured here as °CAM, with the data obtained from example 2 we note that there is a good consistency. The GSK seaweed lot used for example 2 was also used for the present trial.

Thus, the present example demonstrates, with GSK as an example, that the principles illustrated by examples 2-10 may be executed in a large scale in conjunction with a counter current recovery system (see also Applicant's co-pending application No. WO...) for obtaining a build-up of high salt concentrations in the reaction step and for saving on the alkali consumption for the process. It also demonstrates that the obtainable product qualities of the kappa fractions are comparable to the ones obtained in example 2 which was carried out on a pilot scale.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

**1.** A method for the manufacture of carrageenans from seaweed comprising kappa-family carrageenan and lambda-family carrageenan, in particular from bi-component seaweed, wherein the seaweed is subjected to:

1) a heterogenous reaction step in an aqueous alkaline medium having an $OH^-$ concentration and a temperature which enable the modification to the desired extent of kappa-family precursor(s) to gelling kappa-family carrageenan(s);
2) a separation step to separate the solid treated material containing the carrageenan(s) from the liquid phase;
3) one or more fractionation steps, wherein the solid treated seaweed material obtained in 2) is treated with an aqueous extraction medium in order to wash out excess alkali and to extract the lambda-family carrageenan (s); so as to obtain a solid fraction comprising the gelling kappa-family carrageenan(s) and a liquid fraction comprising the lambda-family carrageenan(s);
4a) optionally drying and optionally grinding of the solid fraction obtained in 3) to obtain semi-refined kappa carrageenan (SRC-kappa); and/or
4b) optionally further extraction, purification and isolation of the solid fraction obtained in 3) and/or in 4a) to obtain refined kappa family carrageenan (RC-kappa);

5) optionally further processing of the liquid fraction obtained in 3), comprising the steps of purification and isolation to obtain refined lambda family carrageenan (RC-lambda);
6) optionally further extraction, purification and isolation of the solid material obtained in 2) to obtain a refined mix of kappa-familly and lambda-family carrageenan (RC);

**characterised in that** the aqueous alkaline medium employed in 1) has a content and composition of NaCl and/or KCl and optionally other non-alkali salts, up to a concentration of saturation, sufficient to essentially prevent the disintegration of the seaweed and essentially prevent the dissolution of the carrageenan present therein.

**2.** A method according to claim 1, wherein the seaweed to be processed comprises a mixture of mono- and bi-component seaweed species.

**3.** A method according to claims 1-2, wherein the seaweed is bi-component seaweed.

**4.** A method according to claim 3, wherein the seaweed belongs to one of the families Grigartinaceae or Phyllophoraceae of the ordor Gigartinales.

**5.** A method according to claim 4, wherein the seaweed belongs to one of genera Chondrus, Gigartina or Iridaea.

**6.** A method according to claim 5, wherein the seaweed belongs to one ofthe species Chondrus crispus, Chrondrus ocellatus, Gigartine radula, Gigartina chamissoi, Gigartina pistillata, Gigartina stellata, Gigartina acicularis or Gigartina canaliculata.

**7.** A method according to any of the preceding claims, wherein in the liquid fraction obtained in step 3) is subjected to additionally modifying alkali treatment prior to or during the purification and isolation in step 5).

**8.** A method according to any of the preceding claims, wherein the solid fraction obtained in step 3) is subjected to additionally modifying alkali treatment prior to or during the further work-up of step 4).

**9.** A method according to claim 6, wherein the seaweed to be processed comprises Chondrus NS and wherein the aqueous alkaline medium has an alkali strength of 0 - 12 % (w/v), calculated as NaOH, a KCl concentration of 0-15 % (w/v), a NaCl concentration of 0-20 % (w/v), or another salt mixture and concentration which gives an equivalent dissolution suppressing effect, and a temperature of 40-90 °C.

**10.** A method according to claim 6, wherein the seaweed to be processed comprises Chondrus PEI and wherein the aqueous alkaline medium has an alkali strength of 0 - 12 % (w/v), calculated as NaOH, a KCl concentration of 0-15 % (w/v); a NaCl concentration of 0-20 % (w/v), or another salt mixture and concentration which gives an equivalent dissolution suppressing effect, and a temperature of 40-90 °C.

**11.** A method according to claim 6, wherein the seaweed to be processed comprises GSK and wherein the aqueous alkaline medium has an alkali strength of 0 - 12 % (w/v), calculated as NaOH, a KCl concentration of 0-15 % (w/v), a NaCl concentration of 0-25 % (w/v), or another salt mixture and concentration which gives an equivalent dissolution suppressing effect, and a temperature of 40-90 °C.

**12.** A method according to claim 6, wherein the seaweed to be processed comprises GBL-8 and wherein the aqueous alkaline medium has an alkali strength of 0 - 12 % (w/v), calculated as NaOH, a KCl concentration of 0-30 % (w/v), a NaCl concentration up to saturation, or another salt mixture and concentration which gives an equivalent dissolution suppressing effect, and a temperature of 40-90 °C.

**13.** A method according to claim 6, wherein the seaweed to be processed comprises GBL-10 and wherein the aqueous alkaline medium has an alkali strength of 0 -12 % (w/v), calculated as NaOH, a KCl concentration of 0-25 % (w/v), a NaCl concentration of 0-30 % (w/v), or another salt mixture and concentration which gives an equivalent dissolution suppressing effect, and a temperature of 40-90 °C.

**14.** A method according to claim 6, wherein the seaweed to be processed comprises GNL and wherein the aqueous alkaline medium has an alkali strength of 0 - 12 % (w/v), calculated as NaOH, a KCl concentration up to saturation, a NaCl concentration of 20 % (w/v) up to saturation, or another salt mixture and concentration which gives an equivalent dissolution suppressing effect, and a temperature of 40-90°C.

**15.** A method according to any of the preceding claims, **characterised in that** the steps 1), 2) and 3) are carried out in a single reactor containing the seaweed by supplying and removing the liquids to be used to and from this reactor.

**16.** A method according to claims 1-14 wherein the steps 1), 2) and 3) are carried out in multiple tanks containing aqueous alkaline medium and aqueous extraction medium respectively through which the seaweed is moved.

**17.** A method according to any of the preceding claims for processing more than one batch of seaweed, in particular dry seaweed, which method further comprising a series of one or more lye recovery steps involving one or more lye recovery solutions between step 1) and step 2), **characterised in that** used aqueous alkaline medium obtained in 1) in one batch is reused in 1) when running a later batch, and wherein for each of the lye recovery steps at least part of the used lye recovery solution obtained in one batch is reused in a step preceding this step when running a later batch, and wherein the rest of said used lye recovery solution obtained in one batch is reused in the same step when running a later batch, thereby enabling the recovery of the aqueous alkaline medium employed in the method.

**18.** A method according to any of the preceding claims, wherein the aqueous medium in at least one of the fractionation steps in 3) comprises a potassium salt for exchanging the cations bound to the carrageenan polymer with potassium ions.

**19.** A method according to any of the preceding claims, wherein the aqueous medium in at least one of the steps in 3), comprises a bleaching agent, such as eg. hypochlorite and/or hydrogen peroxide in order to bleach the seaweed.

**20.** A method according to any of the preceding claims, wherein the extent of modification of the kappa-family precursor (s) is/are less than complete modification.

**21.** A method according to any of the preceding claims, wherein the $OH^-$ concentration needed for the modification of the kappa-family precursor(s) is provided by employing one or more alkalis selected among KOH, NaOH, $Na_2CO_3$, Na-phosphates, $K_2CO_3$, K-phosphates and ammonia in the aqueous alkaline medium in 1).

**22.** A method according to claim 21, wherein the $OH^-$ concentration needed for the modification of the kappa-family precursor(s) is provided by employing NaOH and/or KOH, in the aqueous alkaline medium in 1).

**23.** A method according to any of the claims 1-22, wherein only the steps 1), 2), 3) and 6) are performed.

**24.** A method according to any of the claim 1- 22, wherein only the steps 1), 2), 3), and 4a) are performed

**25.** A method according to any of the claims 1 - 22, wherein only the steps 1), 2), 3), and 4b) are performed.

**26.** A method according to any of the claims 1 -22, wherein only the steps 1), 2), 3), 4a) and 4b) are performed.

**27.** A method according to any of the claims 1- 22, wherein only the steps 1), 2), 3), 4a) and 5) are performed.

**28.** A method according to any of the claims 1- 22, wherein only the steps 1), 2), 3), 4b) and 5) are performed.

**29.** A method according to any of the claims 1-22, wherein all the steps 1), 2), 3), 4a), 4b) and 5) are performed.

**Patentansprüche**

**1.** Verfahren zur Herstellung von Carrageenanen aus Seealgen, umfassend Carrageenan der der Kappa-Familie und Carrageenan der Lambda-Familie, insbesondere aus Zweikomponenten-Seealgen, wobei die Seealgen folgendem unterzogen wird:

1) einem heterogenen Reaktionsschritt in einem wässrigen alkalischen Medium, das eine $OH^-$-Konzentration und eine Temperatur aufweist, die in der Lage ist, die Modifikation des Precursors bzw. der Precursor der Kappa-Familie zu gelierendem Carrageenan bzw. gelierenden Carrageenanen der Kappa-Familie zum gewünschten Ausmaß zu ermöglichen;
2) einem Abtrennungsschritt, um das feste behandelte Material, das das Carrageenan bzw. die Carrageenane enthält, von der flüssigen Phase abzutrennen;

3) einem oder mehreren Fraktionierungsschritten, wobei das in 2) erhaltene feste behandelte Material mit einem wässrigen Extraktionsmedium behandelt wird, um überschüssiges Alkali auszuwaschen und das Carrageenan bzw. die Carrageenane der Lambda-Familie zu extrahieren, so dass eine feste Fraktion, die das gelierende Carrageenan bzw. die gelierenden Carrageenane der Kappa-Familie umfasst, und eine flüssige Fraktion erhalten wird, die das Carrageenan bzw. die Carrageenane der Lambda-Familie umfasst;
4a) wahlweise Trocknen und wahlweise Mahlen der in 3) erhaltenen festen Fraktion, um ein halbraffiniertes Kappa-Carrageenan (SRC-Kappa) zu erhalten; und/oder 4b) wahlweise weiterem Extrahieren, Reinigen und Isolieren der der in 3) und/oder 4a) erhaltenen festen Fraktion, um raffiniertes Carrageenan der Kappa-Familie (RC-Kappa) zu erhalten;
5) wahlweise weiterem Verarbeiten der in 3) erhaltenen flüssigen Fraktion, umfassend die Schritte des Reinigens und Isolierens, um raffiniertes Carrageenan der Lambda-Familie zu erhalten (RC-Lambda);
6) wahlweise weiterem Extrahieren, Reinigen und Isolieren des in 2) erhaltenen festen Materials, um eine raffinierte Mischung aus Carrageenan der Kappa-Familie und der Lambda-Familie (RC) zu erhalten;

**dadurch gekennzeichnet, dass** das in 1) eingesetzte wässrige alkalische Medium einen Gehalt und eine Zusammensetzung an NaCl und/oder KCl und wahlweise anderen Nicht-Alkali-Salzen bis zu einer Konzentration der Sättigung aufweist, die ausreicht, um die Zersetzung der Seealge im Wesentlichen zu verhindern und die Auflösung des darin vorhandenen Carrageenans im Wesentlichen zu verhindern.

**2.** Verfahren nach Anspruch 1, wobei die zu verarbeitende Seealge eine Mischung aus Ein- und Zweikomponenten-Seealgenarten umfasst.

**3.** Verfahren nach Anspruch 1 bis 2, wobei die Seealge eine Zweikomponenten-Seealge ist.

**4.** Verfahren nach Anspruch 3, wobei die Seealge einer der Familien Gigartinaceae oder Phyllophoraceae der Ordnung Gigartinales angehört.

**5.** Verfahren nach Anspruch 4, wobei die Seealge einer der Gattungen Choridrus, Gigartina oder Iridaea angehört.

**6.** Verfahren nach Anspruch 5, wobei die Seealge einer der Arten Chondrus crispus, Chondrus ocellatus, Gigartine radula, Gigartina chamissoi, Gigartina pistillata, Gigartina stellata, Gigartina acicularis oder Gigartina canaliculata angehört.

**7.** Verfahren nach einem der vorherigen Ansprüche, wobei die in Schritt 3) erhaltene flüssige Fraktion vor oder während des Reinigens und Isolierens in Schritt 5) einer zusätzlichen Modifizierungs-Alkalibehandlung unterzogen wird.

**8.** Verfahren nach einem der vorherigen Ansprüche, wobei die in Schritt 3) erhaltene feste Fraktion vor oder während des weiteren Aufarbeitens von Schritt 4) einer zusätzlichen Modifizierungs-Alkalibehandlung unterzogen wird.

**9.** Verfahren nach Anspruch 6, wobei die zu verarbeitende Seealge Chondrus NS umfasst und wobei das wässrige alkalische Medium eine Alkalistärke von 0 bis 12 % (Gewicht/Volumen), berechnet als NaOH, eine KCl-Konzentration von 0 bis 15 % (Gewicht/Volumen), eine NaCl-Konzentration von 0 bis 20 % (Gewicht/Volumen) oder eine andere Salzmischung und -konzentration, die einen äquivalenten Lösungsunterdrückungseffekt bewirkt, und eine Temperatur von 40 bis 90 °C aufweist.

**10.** Verfahren nach Anspruch 6, wobei die zu verarbeitende Seealge Chondrus PEI umfasst und wobei das wässrige alkalische Medium eine Alkalistärke von 0 bis 12 % (Gewicht/Volumen), berechnet als NaOH, eine KCl-Konzentration von 0 bis 15 % (Gewicht/Volumen), eine NaCl-Konzentration von 0 bis 20 % (Gewicht/Volumen) oder eine andere Salzmischung und -konzentration, die einen äquivalenten Lösungsunterdrückungseffekt bewirkt, und eine Temperatur von 40 bis 90 °C aufweist.

**11.** Verfahren nach Anspruch 6, wobei die zu verarbeitende Seealge GSK umfasst und wobei das wässrige alkalische Medium eine Alkalistärke von 0 bis 12 % (Gewicht/Volumen), berechnet als NaOH, eine KCl-Konzentration von 0 bis 15 % (Gewicht/Volumen), eine NaCl-Konzentration von 0 bis 25 % (Gewicht/Volumen) oder eine andere Salzmischung und -konzentration, die einen äquivalenten Lösungsunterdrückungseffekt bewirkt, und eine Temperatur von 40 bis 90 °C aufweist.

**12.** Verfahren nach Anspruch 6, wobei die zu verarbeitende Seealge GBL-8 umfasst und wobei das wässrige alkalische Medium eine Alkalistärke von 0 bis 12 % (Gewicht/Volumen), berechnet als NaOH, eine KCl-Konzentration von 0 bis 30 % (Gewicht/Volumen), eine NaCl-Konzentration bis zur Sättigung oder eine andere Salzmischung und -konzentration, die einen äquivalenten Lösungsunterdrückungseffekt bewirkt, und eine Temperatur von 40 bis 90 °C aufweist.

**13.** Verfahren nach Anspruch 6, wobei die zu verarbeitende Seealge GBL-10 umfasst und wobei das wässrige alkalische Medium eine Alkalistärke von 0 bis 12 % (Gewicht/Volumen), berechnet als NaOH, eine KCl-Konzentration von 0 bis 25 % (Gewicht/Volumen), eine NaCl-Konzentration von 0 bis 30 % (Gewicht/Volumen) oder eine andere Salzmischung und -konzentration, die einen äquivalenten Lösungsunterdrückungseffekt bewirkt, und eine Temperatur von 40 bis 90 °C aufweist.

**14.** Verfahren nach Anspruch 6, wobei die zu verarbeitende Seealge GNL umfasst und wobei das wässrige alkalische Medium eine Alkalistärke von 0 bis 12 % (Gewicht/Volumen), berechnet als NaOH, eine KC1-Konzentration bis zur Sättigung, eine NaCl-Konzentration von 20 % (Gewicht/Volumen) bis zur Sättigung oder eine andere Salzmischung und -konzentration, die einen äquivalenten Lösungsunterdrückungseffekt bewirkt, und eine Temperatur von 40 bis 90 °C aufweist.

**15.** Verfahren nach einem der vorherigen Ansprüche, **dadurch gekennzeichnet, dass** die Schritte 1), 2) und 3) in einem einzelnen Reaktor ausgeführt werden, der die Seealge enthält, durch Zuführen und Entfernen der zu verwendenden Flüssigkeiten zu und aus diesem Reaktor.

**16.** Verfahren nach einem der Ansprüche 1 bis 14, **dadurch gekennzeichnet, dass** die Schritte 1), 2) und 3) in mehreren Reaktoren ausgeführt werden, die das wässrige alkalische Medium bzw. wässrige Extraktionsmedium enthalten, durch welche die Seealge bewegt wird.

**17.** Verfahren nach einem der vorherigen Ansprüche zum Verarbeiten von mehr als einer Charge an Seealge, insbesondere trockener Seealge, welches Verfahren darüber hinaus eine Reihe von einem oder mehreren Laugenrückgewinnungsschritten umfasst, mit denen eine oder mehrere Laugenrückgewinnungslösungen zwischen Schritt 1) und Schritt 2) einhergehen, **dadurch gekennzeichnet, dass** gebrauchtes wässriges alkalisches Medium, das in 1) erhalten wird, in 1) wieder verwendet wird, wenn eine spätere Charge verarbeitet wird, und wobei für jeden der Laugenrückgewinnungsschritte wenigstens ein Teil der gebrauchten Laugenrückgewinnungslösung, die bei einer Charge erhalten wurde, wieder in einem Schritt verwendet wird, der diesem Schritt vorausgeht, wenn eine spätere Charge verarbeitet wird, und wobei der Rest der gebrauchten Laugenrückgewinnungslösung, die bei einer Charge erhalten wurde, wieder im gleichen Schritt verwendet wird, wenn eine spätere Charge verarbeitet wird, wodurch die Rückgewinnung des bei dem Verfahren eingesetzten wässrigen alkalischen Mediums ermöglicht wird.

**18.** Verfahren nach einem der vorherigen Ansprüche, wobei das wässrige Medium bei wenigstens einem der Fraktionierungsschritte in 3) ein Kaliumsalz zum Austauschen der an das Carrageenan-Polymer gebundenen Kationen durch Kaliumionen enthält.

**19.** Verfahren nach einem der vorherigen Ansprüche, wobei das wässrige Medium bei wenigstens einem der Fraktionierungsschritte in 3) ein Bleichmittel, wie etwa Hypochlorit und/oder Wasserstoffperoxid enthält, um die Seealge zu bleichen.

**20.** Verfahren nach einem der vorherigen Ansprüche, wobei das Modifizierungsausmaß des Precursors bzw. der Precursor der Kappa-Familie geringer ist als vollständige Modifizierung.

**21.** Verfahren nach einem der vorherigen Ansprüche, wobei die für die Modifizierung des Precursors bzw. der Precursor der Kappa-Familie im wässrigen alkalischen Medium in 1) benötigte $OH^-$-Konzentration durch Einsetzen von einem oder mehreren Alkalien bereitgestellt wird, die aus KOH, NaOH, $Na_2CO_3$, Na-Phosphaten, $K_2CO_3$, K-Phosphaten und Ammoniak ausgewählt sind.

**22.** Verfahren nach Anspruch 21, wobei die die für die Modifizierung des Precursors bzw. der Precursor der Kappa-Familie im wässrigen alkalischen Medium in 1) benötigte $OH^-$-Konzentration durch Einsetzen von NaOH und/oder KOH bereitgestellt wird.

**23.** Verfahren nach einem der Ansprüche 1 bis 22, wobei nur die Schritte 1), 2), 3) und 6) ausgeführt werden.

**24.** Verfahren nach einem der Ansprüche 1 bis 22, wobei nur die Schritte 1), 2), 3) und 4a) ausgeführt werden.

**25.** Verfahren nach einem der Ansprüche 1 bis 22, wobei nur die Schritte 1), 2), 3) und 4b) ausgeführt werden.

**26.** Verfahren nach einem der Ansprüche 1 bis 22, wobei nur die Schritte 1), 2), 3), 4a) und 4b) ausgeführt werden.

**27.** Verfahren nach einem der Ansprüche 1 bis 22, wobei nur die Schritte 1), 2), 3), 4a) und 5) ausgeführt werden.

**28.** Verfahren nach einem der Ansprüche 1 bis 22, wobei nur die Schritte 1), 2), 3), 4b) und 5) ausgeführt werden.

**29.** Verfahren nach einem der Ansprüche 1 bis 22, wobei die Schritte 1), 2), 3), 4a), 4b) und 5) ausgeführt werden.

**Revendications**

**1.** Procédé de fabrication de carraghénanes à partir d'algues, comprenant la famille des kappa-carraghénanes et la famille des lamda-carraghénanes, en particulier à partir d'algues à deux composants, dans lequel l'algue est soumise aux étapes suivantes :

1) une étape de réaction hétérogène dans un milieu alcalin aqueux ayant une concentration en $OH^-$ et une température permettant la modification en l'étendue désirée du ou des précurseurs de la famille kappa en carraghénanes de la famille kappa gélifiantes ;
2) une étape de séparation pour séparer la matière solide traitée contenant la ou les carraghénanes vis-à-vis de la phase liquide;
3) une ou plusieurs étapes de fractionnement, dans lesquelles la matière d'algue solide traitée obtenue à l'étape 2) est traitée avec un milieu d'extraction aqueux afin de lessiver l'alcali excédentaire et d'extraire la ou les carraghénanes de la famille lambda ; de manière à obtenir une fraction solide comprenant la ou les carraghénanes de la famille kappa gélifiantes et une fraction liquide comprenant la ou les carraghénanes de la famille lambda ;
4a) éventuellement le séchage et éventuellement le broyage de la fraction solide obtenue à l'étape 3) pour obtenir une kappa-carraghénane semi-raffinée (SRC-kappa) ; et/ou
4b) éventuellement une extraction, purification et isolation ultérieure de la fraction solide obtenue à l'étape 3) et/ou 4a) pour obtenir une kappa-carraghénane raffinée (RC-kappa) ;
5) le cas échéant une transformation ultérieure de la fraction liquide obtenue à l'étape 3), comprenant les étapes de purification et d'isolation pour obtenir une carraghénane raffinée de la famille lambda (RC-lambda) ;
6) éventuellement une extraction, purification et isolation ultérieure de la matière solide obtenue à l'étape 2) pour obtenir un mélange raffiné de carraghénanes de la famille kappa et de la famille lambda (RC) ;

**caractérisé en ce que** le milieu alcalin aqueux utilisé à l'étape 1) a une teneur et composition en NaCl et/ou KCl et éventuellement en autres sels non alcalins, jusqu'à une concentration de saturation, suffisante pour sensiblement éviter la désintégration de l'algue et pour sensiblement éviter la dissolution de la carraghénane qui y est présente.

**2.** Procédé selon la revendication 1, dans lequel l'algue à transformer comprend un mélange d'espèces d'algues à un composant et à deux composants.

**3.** Procédé selon les revendications 1 à 2, dans lequel l'algue est une algue à deux composants.

**4.** Procédé selon la revendication 3, dans lequel l'algue appartient à une des familles *Gigrartinaceae* ou *Phyllophoraceae* de l'ordre des Gigartinales.

**5.** Procédé selon la revendication 4, dans lequel l'algue appartient à l'un des genres Chondrus, *Gigartina* ou *Iridaea.*

**6.** Procédé selon la revendication 5, dans lequel l'algue appartient à l'une des espèces *Chondrus crispus, Chondrus ocellatus, Gigartina radula, Gigartina chamissoi, Gigartina pistillata, Gigartina stellata, Gigartina acicularis ou Gigartina canaliculata.*

**7.** Procédé selon l'une quelconque des revendications précédentes, dans lequel la fraction liquide obtenue à l'étape 3) est soumise à un traitement alcalin modificateur supplémentaire avant ou pendant la purification et l'isolation à l'étape 5).

**8.** Procédé selon l'une quelconque des revendications précédentes, dans lequel la fraction solide obtenue à l'étape 3) est soumise à un traitement alcalin modificateur supplémentaire avant ou pendant la retransformation de l'étape 4) .

**9.** Procédé selon la revendication 6, dans lequel l'algue à transformer comprend le *Chondrus NS* et dans lequel le milieu alcalin aqueux a une force en alcali de 0 à 12 % (poids/volume), calculé sous forme de NaOH, une concentration en KCl de 0 à 15 % (poids/volume), une concentration en NaCl de 0 à 20 % (poids/volume), ou un autre mélange de sel et une concentration, qui donne un effet suppresseur de dissolution équivalent, et a une température de 40 à 90°C.

**10.** Procédé selon la revendication 6, dans lequel l'algue à transformer comprend le *Chondrus PEI* et dans lequel le milieu alcalin aqueux a une force en alcali de 0 à 12 % (poids/volume), calculé sous forme de NaOH, une concentration en KCl de 0 à 15 % (poids/volume), une concentration en NaCl de 0 à 20 % (poids/volume), ou un autre mélange de sel et une concentration, qui donne un effet suppresseur de dissolution équivalent, et a une température de 40 à 90°C.

**11.** Procédé selon la revendication 6, dans lequel l'algue à transformer comprend le GSK et dans lequel le milieu alcalin aqueux a une force en alcali de 0 à 12 % (poids/volume), calculé sous forme de NaOH, une concentration en KCl de 0 à 15 % (poids/volume), une concentration en NaCl de 0 à 25 % (poids/volume), ou un autre mélange de sel et une concentration, qui donne un effet suppresseur de dissolution équivalent, et a une température de 40 à 90°C.

**12.** Procédé selon la revendication 6, dans lequel l'algue à transformer comprend le GBL-8 et dans lequel le milieu alcalin aqueux a une force en alcali de 0 à 12 % (poids/volume), calculé sous forme de NaOH, une concentration en KCl de 0 à 30 % (poids/volume), une concentration en NaCl jusqu'à saturation, ou un autre mélange de sel et une concentration, qui donne un effet suppresseur de dissolution équivalent, et a une température de 40 à 90°C.

**13.** Procédé selon la revendication 6, dans lequel l'algue à transformer comprend le GBL-10 et dans lequel le milieu alcalin aqueux a une force en alcali de 0 à 12 % (poids/volume), calculé sous forme de NaOH, une concentration en KCl de 0 à 25 % (poids/volume), une concentration en NaCl de 0 à 30 % (poids/volume), ou un autre mélange de sel et une concentration, qui donne un effet suppresseur de dissolution équivalent, et a une température de 40 à 90°C.

**14.** Procédé selon la revendication 6, dans lequel l'algue à transformer comprend le GNL et dans lequel le milieu alcalin aqueux a une force en alcali de 0 à 12 % (poids/volume), calculé sous forme de NaOH, une concentration en KCl jusqu'à saturation, une concentration en NaCl de 20 % (poids/volume) jusqu'à saturation, ou un autre mélange de sel et une concentration, qui donne un effet suppresseur de dissolution équivalent, et a une température de 40 à 90°C.

**15.** Procédé selon l'une quelconque des revendications précédentes, **caractérisé en ce que** les étapes 1), 2) et 3) sont réalisées dans un unique réacteur contenant l'algue en fournissant et retirant les liquides à utiliser dans et hors de ce réacteur.

**16.** Procédé selon les revendication 1 à 14, dans lequel les étapes 1), 2) et 3) sont réalisées dans des réservoirs multiples contenant le milieu alcalin aqueux et le milieu d'extraction aqueux respectivement, à travers lesquels l'algue est déplacée.

**17.** Procédé selon l'une quelconque des revendications précédentes pour la transformation de plus d'un lot d'algue, en particulier d'algue séchée, ledit procédé comprenant en outre une série d'une ou de plusieurs étapes de récupération de la liqueur, impliquant une ou plusieurs solutions de récupération de la liqueur entre l'étape 1) et l'étape 2), **caractérisé en ce que** le milieu alcalin aqueux usagé obtenu à l'étape 1) dans un lot est réutilisé à l'étape 1) lors du passage d'un lot ultérieur et dans lequel pour chacune des étapes de récupération de la liqueur, au moins une partie de la solution de récupération de la liqueur usagée obtenue dans un lot est réutilisée dans une étape précédant cette étape, lors du passage d'un lot ultérieur, et dans lequel le reste de ladite solution de récupération de la liqueur usagée obtenue dans un lot est réutilisée dans la même étape lors du passage d'un lot ultérieur, ce qui permet la récupération du milieu alcalin aqueux utilisé dans ce procédé.

**18.** Procédé selon l'une quelconque des revendications précédentes, dans lequel le milieu aqueux dans au moins une des étapes de fractionnement à l'étape 3) comprend un sel potassique pour échanger les cations liés au polymère de carraghénane avec des ions potassium.

**19.** Procédé selon l'une quelconque des revendications précédentes, dans lequel le milieu aqueux dans au moins une des étapes de l'étape 3) comprend un agent de blanchiment, comme par exemple l'hypochlorite et/ou le peroxyde d'hydrogène afin de blanchir l'algue.

**20.** Procédé selon l'une quelconque des revendications précédentes, dans lequel l'étendue de la modification du ou des précurseurs de la famille kappa est plus faible qu'une modification complète.

**21.** Procédé selon l'une quelconque des revendications précédentes, dans lequel la concentration en $OH^-$ nécessaire pour la modification du ou des précurseurs de la famille kappa est fournie par l'utilisation d'un ou de plusieurs alcalins choisis parmi KOH, NaOH, $Na_2CO_3$, Na-phosphates, $K_2CO_3$, K-phosphates et ammoniac dans le milieu alcalin aqueux à l'étape 1).

**22.** Procédé selon la revendication 21, dans lequel la concentration en $OH^-$ nécessaire à la modification du ou des précurseurs de la famille kappa est fournie par l'utilisation du NaOH et/ou du KOH, dans le milieu alcalin aqueux à l'étape 1) .

**23.** Procédé selon l'une quelconque des revendications précédentes 1 à 22, dans lequel seules les étapes 1), 2), 3) et 6) sont réalisées.

**24.** Procédé selon l'une quelconque des revendications précédentes 1 à 22, dans lequel seules les étapes 1), 2), 3) et 4a) sont réalisées.

**25.** Procédé selon l'une quelconque des revendications précédentes 1 à 22, dans lequel seules les étapes 1), 2), 3) et 4b) sont réalisées.

**26.** Procédé selon l'une quelconque des revendications précédentes 1 à 22, dans lequel seules les étapes 1), 2), 3), 4a) et 4b) sont réalisées.

**27.** Procédé selon l'une quelconque des revendications précédentes 1 à 22, dans lequel seules les étapes 1), 2), 3), 4a) et 5) sont réalisées.

**28.** Procédé selon l'une quelconque des revendications précédentes 1 à 22, dans lequel seules les étapes 1), 2), 3), 4b) et 5) sont réalisées.

**29.** Procédé selon l'une quelconque des revendications précédentes 1 à 22, dans lequel seules les étapes 1), 2), 3), 4a), 4b) et 5) sont réalisées.

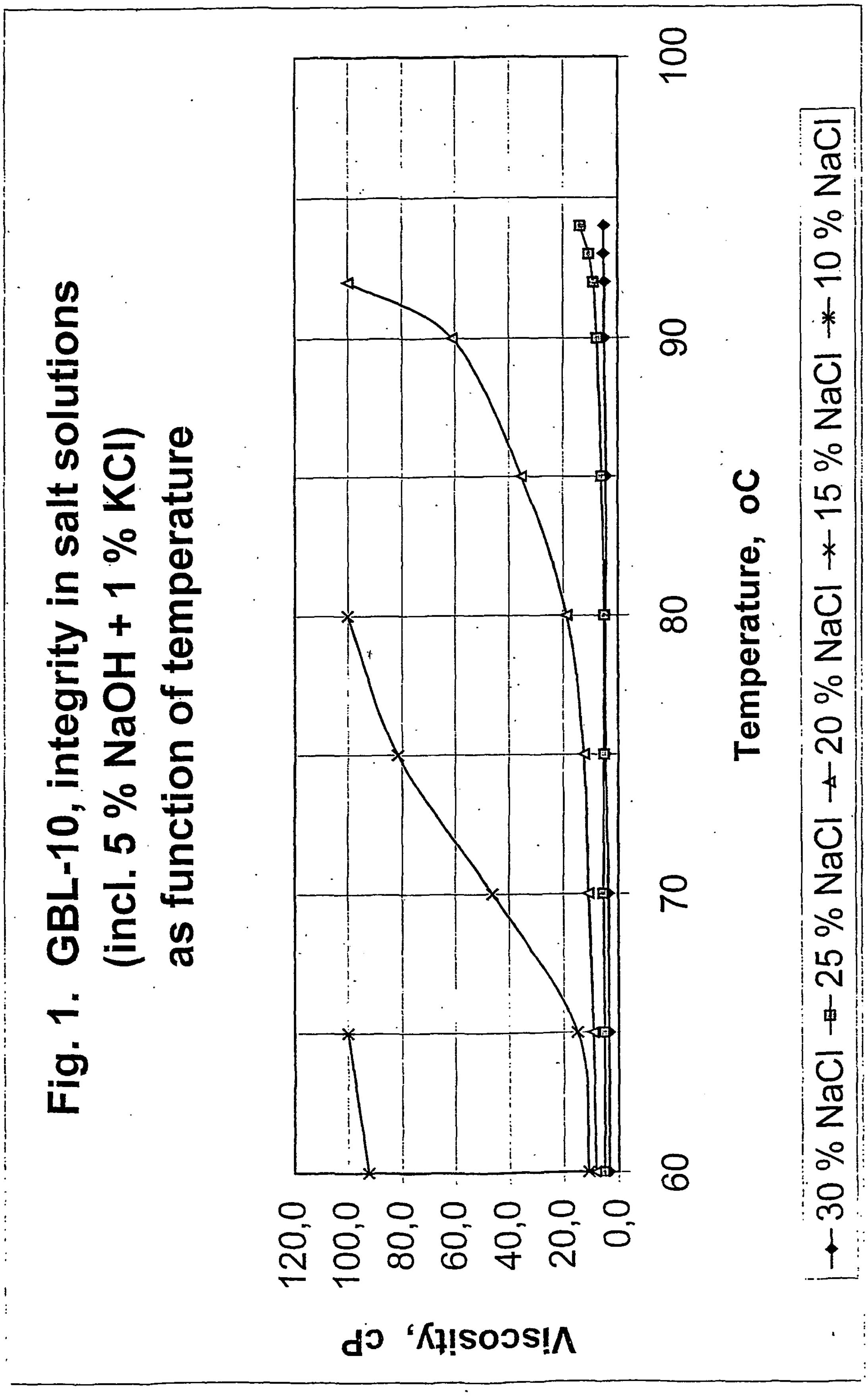


Fig. 1. GBL-10, integrity in salt solutions (incl. 5 % NaOH + 1 % KCl) as function of temperature

**Fig. 2. Phase diagram for bi-comp. seaweeds in 5 % NaOH + 1 % KCl + X % NaCl**

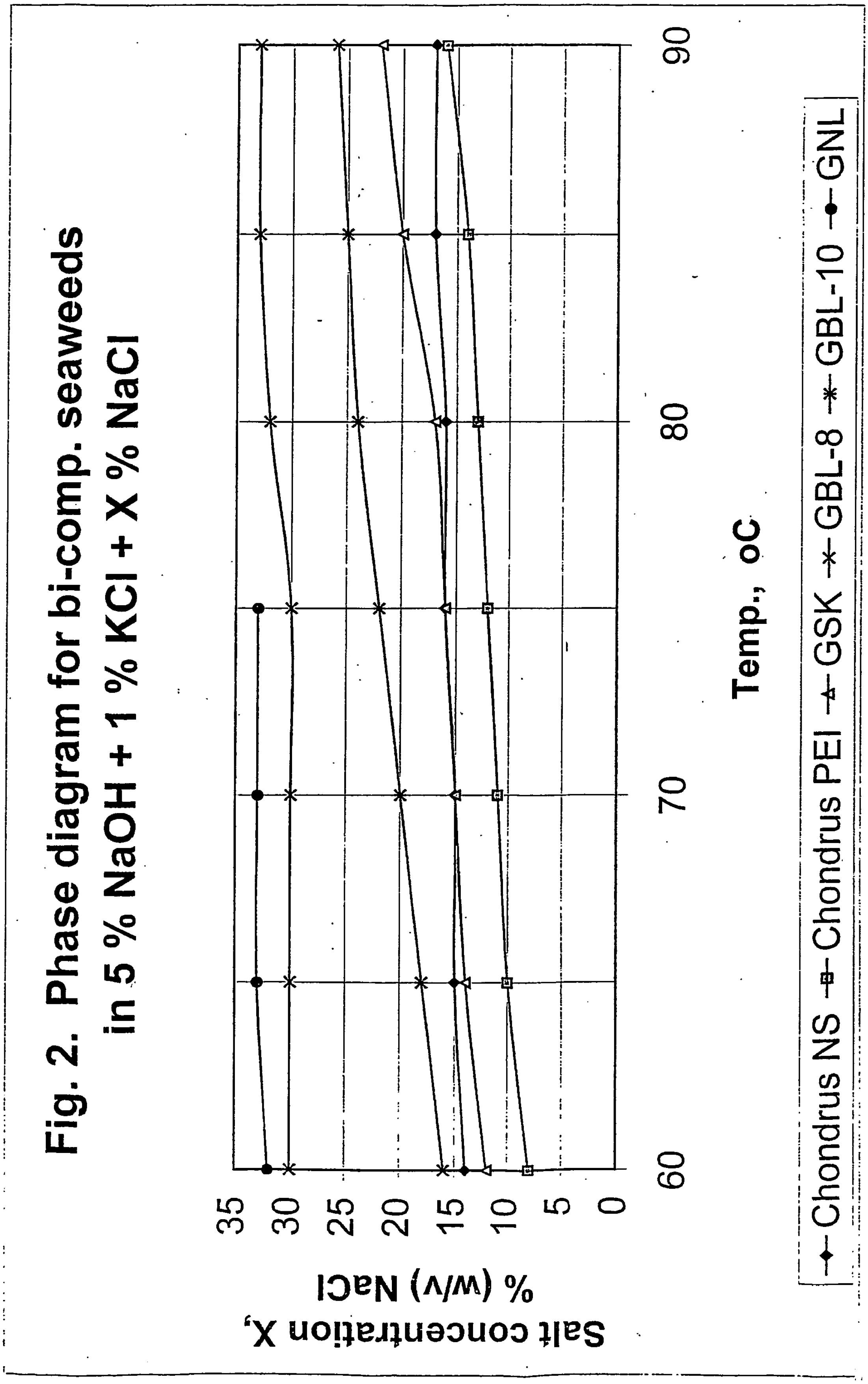

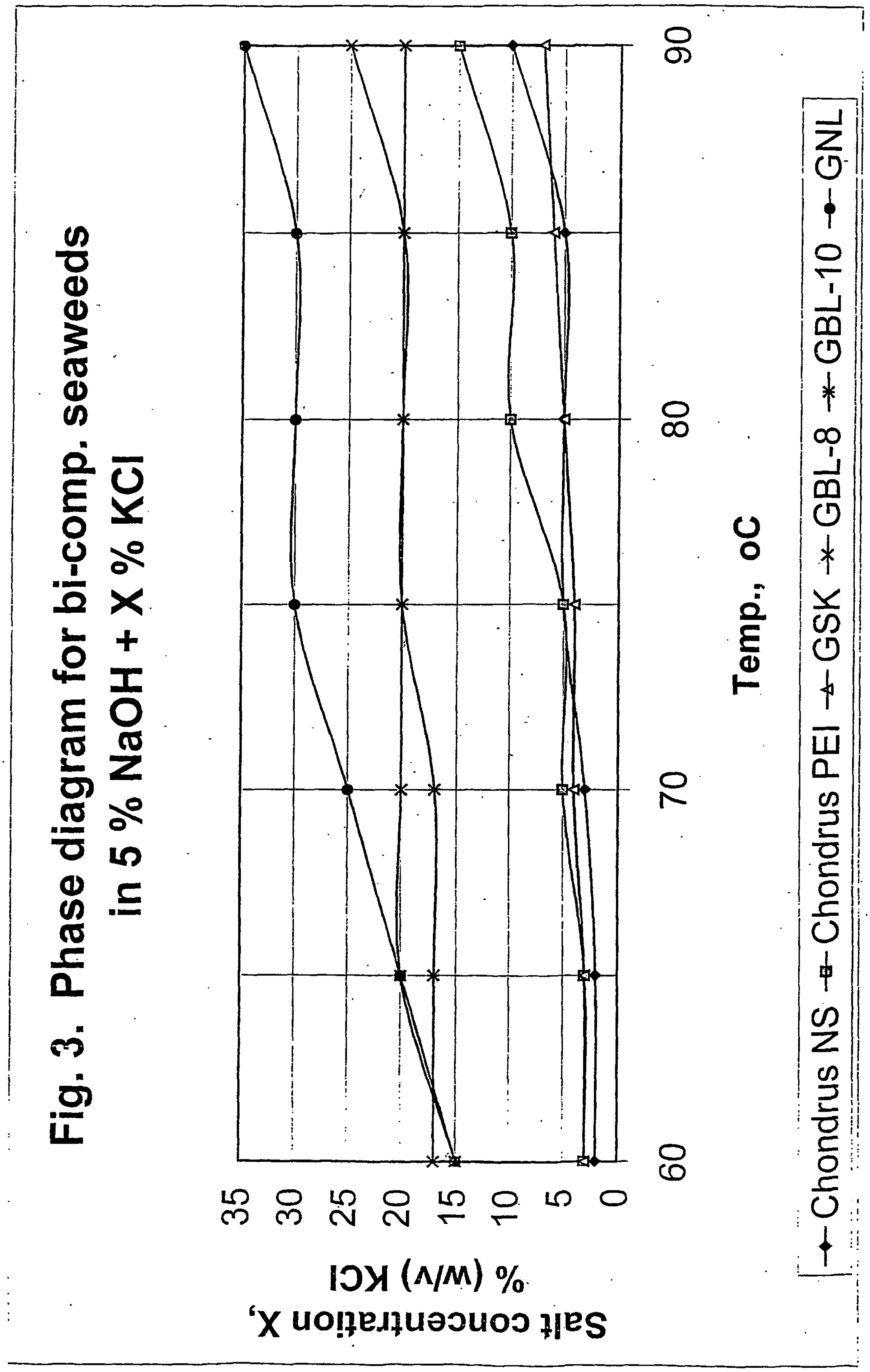
Fig. 3. Phase diagram for bi-comp. seaweeds
in 5 % NaOH + X % KCl
Salt concentration X,
% (w/v) KCl
35
30
25
20
15
10
5
0
60
70
80
90
Temp., oC
Chondrus NS
Chondrus PEI
GSK
GBL-8
GBL-10
GNL

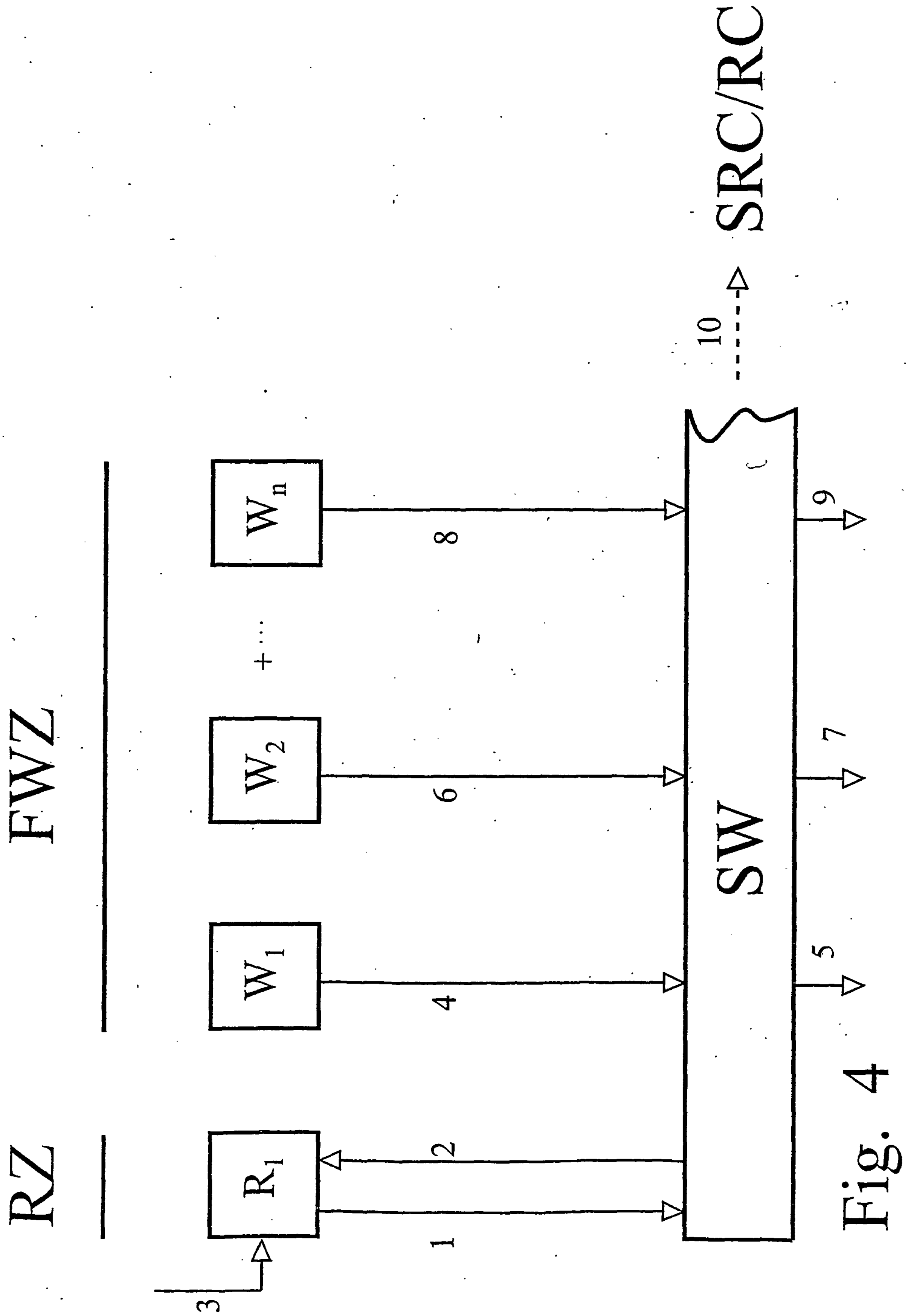


Fig. 4

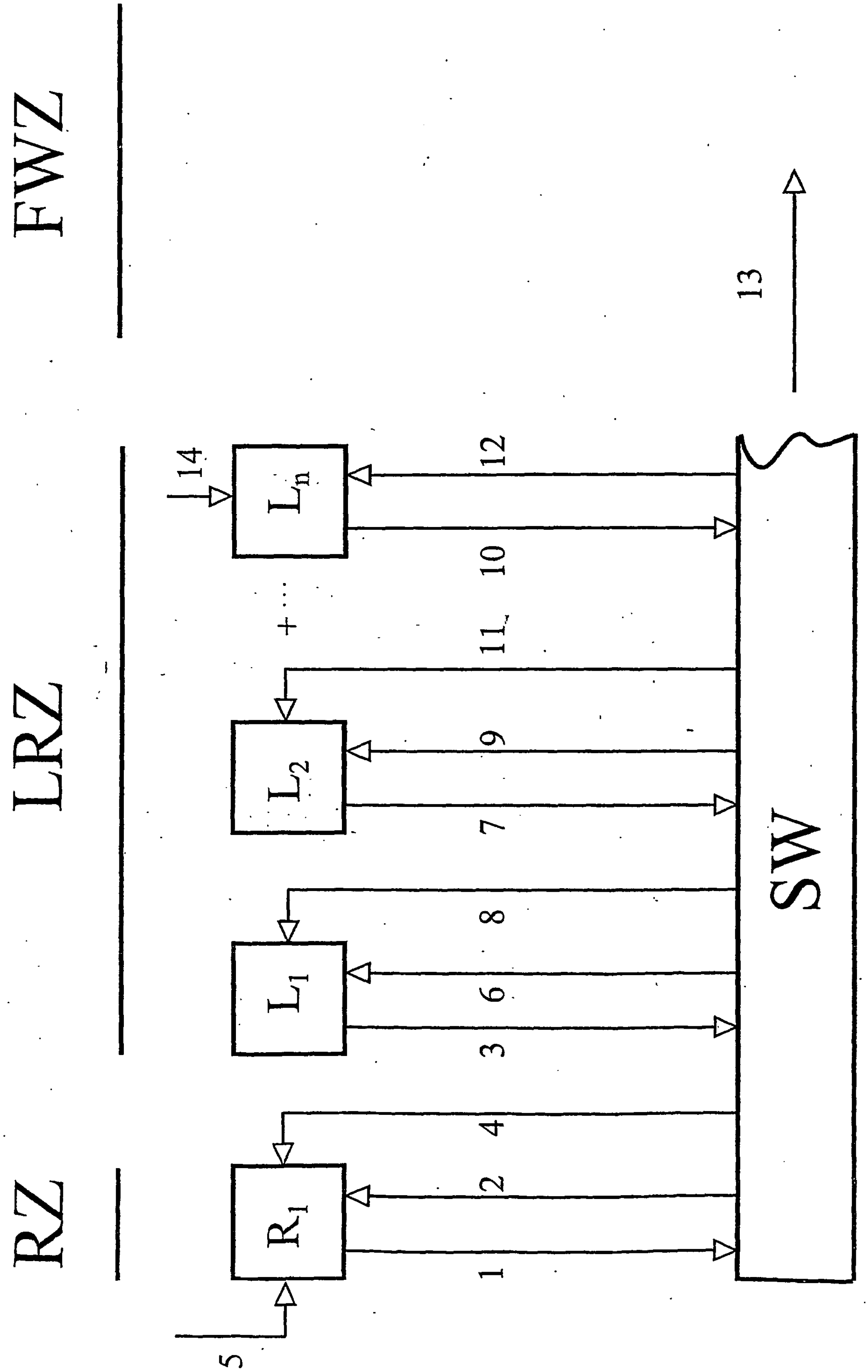


Fig. 5

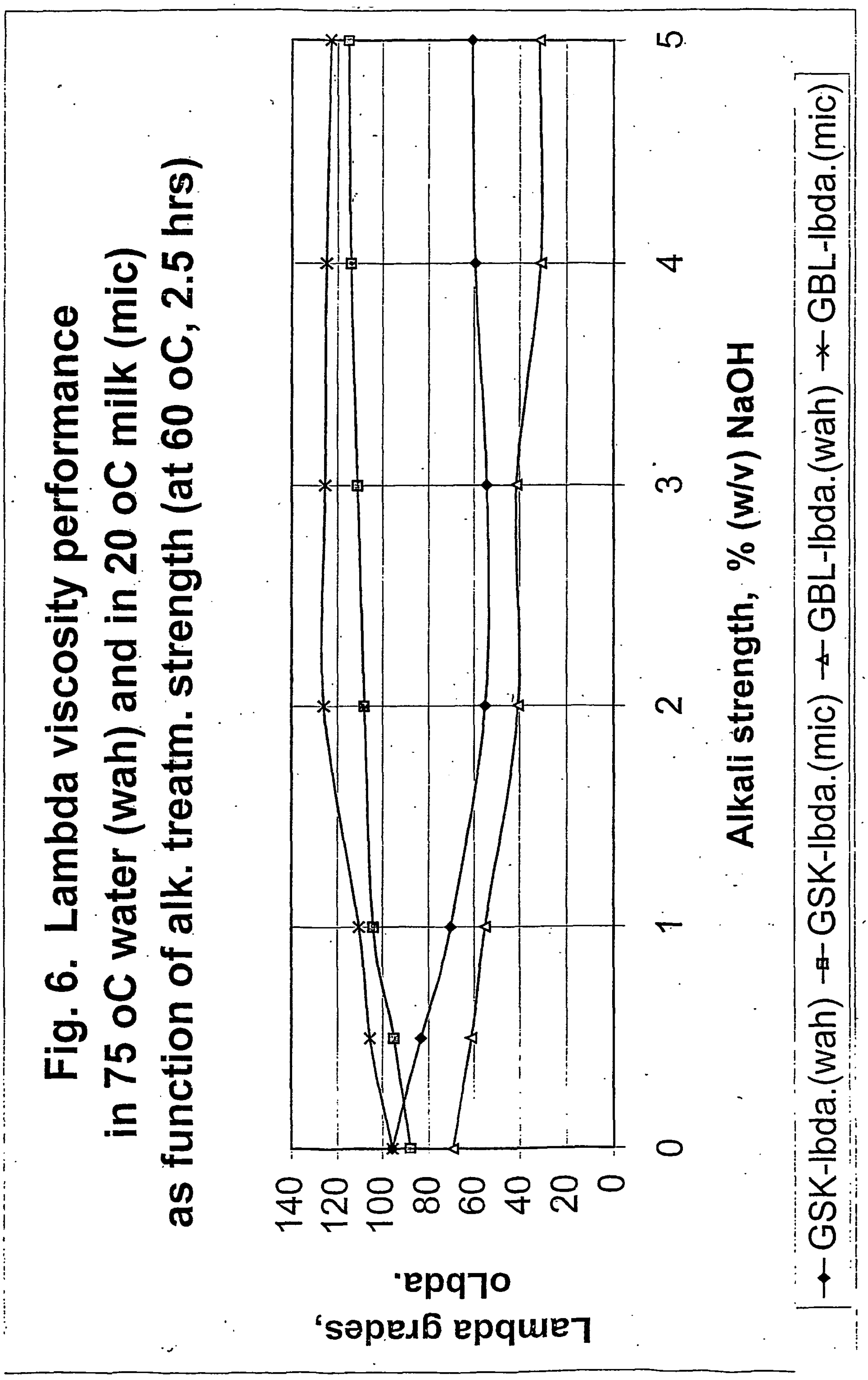
Fig. 6. Lambda viscosity performance
in 75 oC water (wah) and in 20 oC milk (mic)
as function of alk. treatm. strength (at 60 oC, 2.5 hrs)
Lambda grades, oLbda.
140
120
100
80
60
40
20
0
0
1
2
3
4
5
Alkali strength, % (w/v) NaOH
GSK-lbda.(wah)
GSK-lbda.(mic)
GBL-lbda.(wah)
GBL-lbda.(mic)